# EUROPEAN PATENT SPECIFICATION

(11) **EP 4 525 220 B1**
(45) Date of publication and mention of the grant of the patent: **07.10.2026**
(21) Application number: 24191768.1
(22) Date of filing: 30.07.2024
(51) Int. Cl.: H01R 24/44, B29C 45/14, H01R 13/6474, H01R 13/504, H01R 9/05, H01R 13/6592

(54) **CONNECTOR AND METHOD FOR MANUFACTURING CONNECTOR**
VERBINDER UND VERFAHREN ZUR HERSTELLUNG EINES VERBINDERS
CONNECTEUR ET PROCÉDÉ DE FABRICATION DE CONNECTEUR

(30) Priority: 14.09.2023 JP 2023149093
(43) Date of publication of application: 19.03.2025
(73) Proprietor: HOSIDEN CORPORATION, Yao-shi, Osaka 581-0071 (JP)
(72) Inventor: IKEDA, Takumi, Yao-shi, 581-0071 (JP); KONDO, Hayato, Yao-shi, 581-0071 (JP); TAMAKI, Fumitake, Yao-shi, 581-0071 (JP)
(74) Representative: Gill Jennings & Every LLP

(56) References cited:
- US-A1- 2016 134 032
- US-A1- 2018 241 151
- US-A1- 2021 376 543
- US-B2- 9 991 650

## Description

### TECHNICAL FIELD

The invention relates to connectors and methods for manufacturing the connectors.

### BACKGROUND ART

A first conventional connector is described in publication Nos. JP 2013-229334 A and WO 2018/230251 A1. The first connector includes an outer conductor, a central conductor, and a body. The outer conductor includes a shell of circular tubular shape and a pair of first connecting portions. The first connecting portions, which are pieces extending from a rear end of the shell, are disposed behind the shell and spaced from each other in a direction orthogonal to an axial direction of the shell. The central conductor includes a terminal portion and a second connecting portion. The terminal portion has a generally circular tubular shape and includes a distal portion and a rear portion. The distal portion of the terminal portion is concentric with the shell. The rear portion of the terminal portion is disposed behind the shell and between the first connecting portions. The second connecting portion, which is a plate extending substantially at right angles to the rear portion of the terminal portion, is disposed behind the shell and between the first connecting portions. The body is constituted by an insulating material. The rear portion of the shell, portions of the first connecting portions, the rear portion of the terminal portion, and a portion of the second connecting portion are insert-molded inside the body. That is, the body covers the rear portion of the shell, the portions of the first connecting portions, the rear portion of the terminal portion, and the portion of the second connecting portion.

Another conventional connector or a second connector is described in patent publication No. JP 2015-162375 A. The second connector includes an outer conductor, a central conductor, and a body. The outer conductor includes a shell of a circular tubular shape and a first connecting portion. The first connecting portion, which is a plate extending from a rear end of the shell, is disposed behind the shell. The central conductor includes a terminal portion and a second connecting portion. The terminal portion is concentric with the shell. The second connecting portion extends rearward from a rear end of the terminal portion and is disposed behind the shell. The body is constituted by an insulating material, is insert-molded in the shell, and holds the terminal portion inside the shell. US2018/241151, US2016/134032, US9991650 and US2021/376543 all disclose connectors and methods of making the same.

### SUMMARY OF INVENTION

### Technical Problem

In the first connector, the distal portion of the terminal portion is disposed inside the shell, but the rear portion of the terminal portion and the second connecting portion are disposed outside the shell. Also in the second connector, the second connecting portion of the central conductor is disposed outside the shell. Therefore, the first and second connectors have low electromagnetic interference (EMI) characteristics.

The invention provides a connector with improved EMI characteristics and with ease of manufacture. The invention provides a method for manufacturing the connector.

### Solution to Problem

A connector according to the invention is defined in the appended claims.

A method for manufacturing a connector according to the invention is also defined in the appended claims.

### Advantageous Effects of Invention

The connector and the method for manufacturing the connector according to the above aspects provides improved EMI characteristics of the connector for the following reasons. The body is insert-molded, and entirely housed, inside the shell body; the intermediate portion of the terminal is at least partly retained in the housing hole of the body; the terminal is entirely disposed inside the shell body; and the cable is connected to the rear portion of the terminal inside the shell body. As such, the entire terminal and the part where the terminal and the cable are connected together are disposed inside, and shielded by, the shell body, resulting in improved EMI characteristics of the connector.

Moreover, the connector is easy to manufacture for the following reasons. Since the body is insert-molded in the shell body, it is advantageously possible to omit the step of assembling the body into the shell body. The body is provided with the housing hole, and simply by inserting the terminal into the housing hole, the intermediate portion of the terminal is at least partly retained by the body. It is therefore easy to assemble the terminal into the body.

### BRIEF DESCRIPTION OF DRAWINGS

Fig. 1A is a front, top, right side perspective view of a connector according to a first embodiment of the invention.
Fig. 1B is a rear, bottom, left side perspective view of the connector of the first embodiment.
Fig. 2A is a cross-sectional view of the connector of the first embodiment taken along line 2A-2A in Fig. 1A.
Fig. 2B is a cross-sectional view of the connector of the first embodiment taken along line 2B-2B in Fig. 1A.
Fig. 3A is a front, top, right side perspective, exploded view of the connector of the first embodiment.
Fig. 3B is a rear, bottom, left side perspective, exploded view of the connector of the first embodiment.
Fig. 4A is a schematic cross-sectional view of a molding device for insert-molding a body in a shell of the connector according to the first embodiment of the invention.
Fig. 4B is an enlarged view of a part α in Fig. 4A of the molding device.
Fig. 5A is a front, top, right side perspective view of a connector according to a second embodiment of the invention.
Fig. 5B is a rear, bottom, left side perspective view of the connector of the second embodiment.
Fig. 6A is a cross-sectional view of the connector of the second embodiment taken along line 6A-6A in Fig. 5A.
Fig. 6B is a cross-sectional view of the connector of the second embodiment taken along line 6B-6B in Fig. 5A.
Fig. 7Ais a front, top, right side perspective, exploded view of the connector of the second embodiment.
Fig. 7B is a rear, bottom, left side perspective, exploded view of the connector of the second embodiment.

In the brief description of the drawings above and the description of embodiments which follows, relative spatial terms such as "upper", "lower", "top", "bottom", "left", "right", "front", "rear", etc., are used for the convenience of the skilled reader and refer to the orientations of the connectors and their constituent parts as depicted in the drawings. No limitation is intended by use of these terms, either in use of the invention, during its manufacture, shipment, custody, or sale, or during assembly of its constituent parts or when incorporated into or combined with other apparatus.

### DESCRIPTION OF EMBODIMENTS

A plurality of embodiments of the invention, including first and second embodiments and variants thereof, will now be described. It should be noted that constituents of the embodiments and their variants to be described can be combined in any possible manner. It should also be noted that the materials, the shapes, the dimensions, the numbers, the arrangements, etc. of the constituents of the embodiments and their variants to be described are presented by way of example only and can be modified in any manner as long as the same functions can be fulfilled.

### First Embodiment

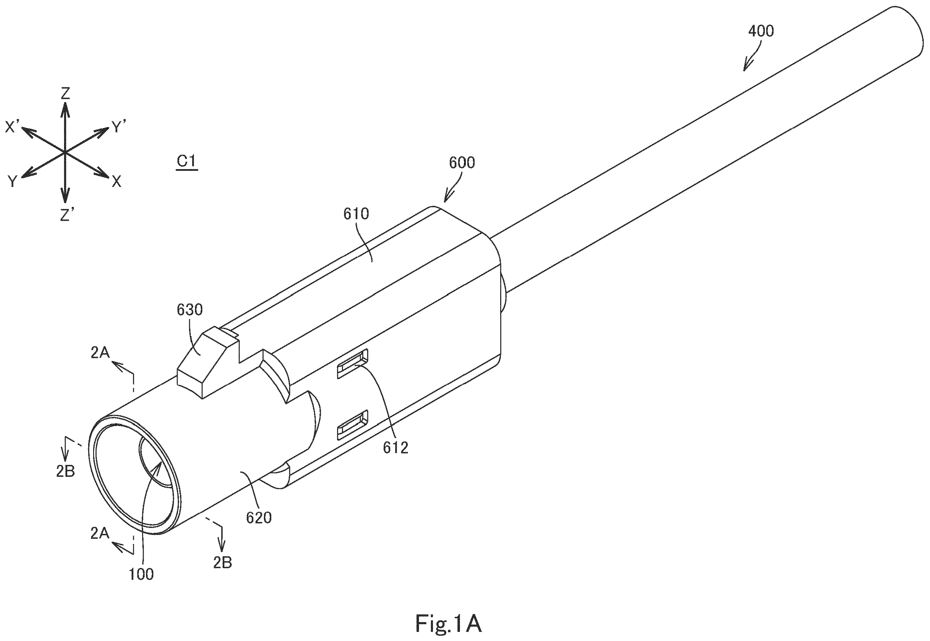

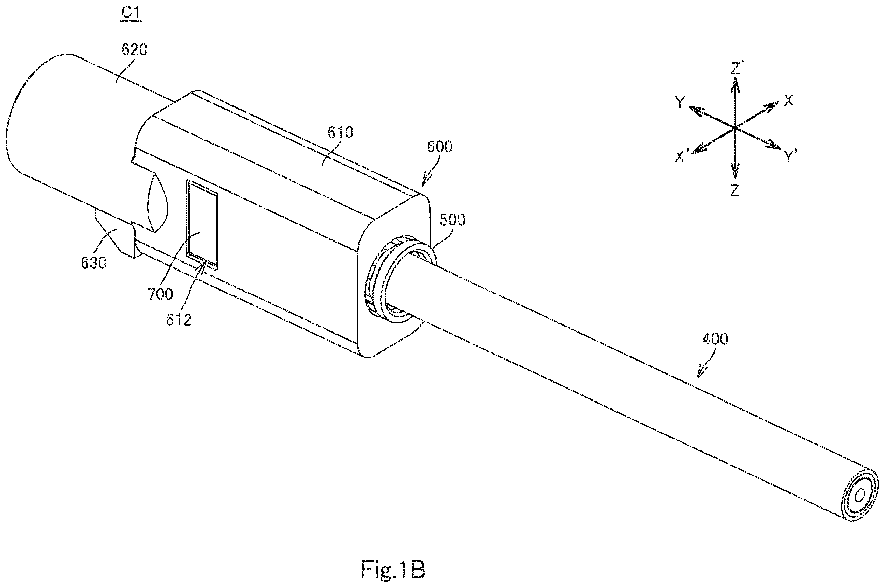

A connector C1 according to a plurality of embodiments of the invention, including the first embodiment and its variants, will now be described with reference to Figs. 1A to 3B. Figs. 1A to 3B illustrate the connector C1 of the first embodiment. Figs. 1A to 3B show a Y-Y' direction (first direction). The Y-Y' direction includes a Y direction (one side in the first direction) and a Y' direction (the other side in the first direction). Figs. 1A to 1B and 2B to 3B show an X-X' direction (second direction). The X-X' direction is substantially orthogonal to the Y-Y' direction and includes an X direction (one side in the second direction) and an X' direction (the other side in the second direction). Figs. 1A to 2A and 2B to 3B show a Z-Z' direction (third direction). The Z-Z' direction is substantially orthogonal to the Y-Y' and X-X' directions and includes a Z direction (one side in the third direction) and a Z' direction (the other side in the third direction).

The connector C1 is a coaxial connector. The connector C1 includes a shell 100 having electrical conductivity.

The shell 100 may be constituted by an electrically conductive material (e.g., a metal or a carbon material such as a carbon nanotube). Alternatively, the shell 100 may include a tubular body, which is constituted by an insulating material, and a metal film, which is plated or vapor-deposited on an outer face of the tubular body. The shell 100 may, but is not required to, be fabricated by subjecting an electrically conductive bar to a machining process.

The shell 100 includes a shell body 110 having a generally tubular shape, such as a generally circular or polygonal tubular shape (a generally tubular shape with a generally circular or polygonal cross section along the Z-Z' and the X-X' directions), and extending in the Y-Y' direction. The shell body 110 may be provided with neither a joint between two ends of a metal plate generated when the metal plate is formed into a tubular shape, a notch, nor a through hole. The shell 100 in its entirety may be provided with neither a joint, a notch, nor a through hole. The through holes, if provided, extend through the shell body 110 or the shell 100 in a direction orthogonal to the Y-Y' direction. The shell body 110 includes a distal portion on a Y-direction side, a rear portion 112 on a Y'-direction side, an inner peripheral face 113 of generally tubular shape, such as a generally circular or polygonal tubular shape (a generally tubular shape with a generally circular or polygonal cross section along the Z-Z' and the X-X' directions), and an outer peripheral face. The distal portion of the shell body 110 includes a distal end 111, which is also a distal end on the Y-direction side of the shell 100. Note that the Y-Y' direction is an axial direction of the shell body 110.

The shell 100 may further include at least one ringlike groove 120 and/or at least one ringlike protrusion 130. For convenience of description, the at least one ringlike groove 120 will be hereinafter described as a single ringlike groove 120, but where a plurality of ringlike grooves 120 is provided, each of them is configured similarly to the single ringlike groove 120. Also, the at least one ringlike protrusion 130 will be hereinafter described as a single protrusion 130, but where a plurality of protrusions 130 is provided, each of them is configured similarly to the single ringlike protrusion 130.

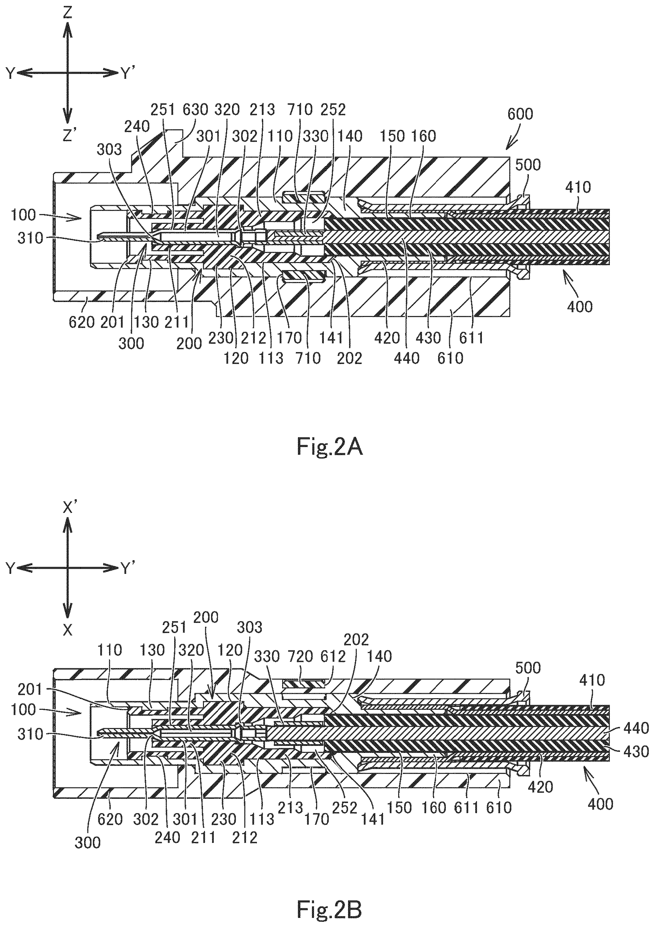

The ringlike groove 120 is a recess of generally ringlike shape (generally circular or polygonal ringlike shape) provided in the inner peripheral face 113 of the shell body 110. The ringlike groove 120 is disposed such that a central axis of the ringlike groove 120 substantially coincides with a central axis of the shell body 110, and the ringlike groove 120 is recessed away from the central axis of the shell body 110 (see Figs. 2A and 2B). The ringlike groove 120 communicates with the inside of the shell body 110. The ringlike groove 120 includes a bottom face having a generally ringlike shape (e.g., a generally circular or polygonal ringlike shape), a first wall face on the Y-direction side having a generally ringlike shape, and a second wall face on the Y'-direction side having a generally ringlike shape.

The ringlike protrusion 130 is a ridge of generally ringlike shape (generally circular or polygonal ringlike shape) provided on the inner peripheral face 113 of the shell body 110. The ringlike protrusion 130 is disposed such that a central axis of the ringlike protrusion 130 substantially coincides with the central axis of the shell body 110, and the ringlike protrusion 130 protrudes toward the central axis of the shell body 110 (see Figs. 2A and 2B). The ringlike protrusion 130 includes a top face having a generally ringlike shape (e.g., a generally circular or polygonal ringlike shape), a first wall face on the Y-direction side having a generally ringlike shape, and a second wall face on the Y'-direction side having a generally ringlike shape.

The shell 100 may further include a bottom 140, a hole 150, and a cable holder 160.

The bottom 140 is provided integrally with the rear portion 112 of the shell body 110 and forms a bottom on the Y'-direction side of the shell body 110 (see Figs. 2A to 3B). As such, the shell body 110 and the bottom 140 constitute a generally close-bottomed tube. The bottom 140 includes a first face 141 on the Y-direction side. The first face 141 of the bottom 140 faces the inside of the shell body 110.

The cable holder 160 is generally shaped like a column (e.g., a generally circular- or polygonal-section column) and extends from the bottom 140 in the Y' direction (see Figs. 2A to 3B). The cable holder 160 may, but is not required to, have outer dimensions in a cross section along the X-X' and Z-Z' directions that are smaller than those of the shell body 110. The cable holder 160 includes an outer peripheral face of a generally tubular shape, such as a generally circular or polygonal tubular shape (a generally tubular shape with a generally circular or polygonal cross section along the Z-Z' and the X-X' directions), and a rear face on the Y'-direction side. The cable holder 160 can be omitted.

Where the cable holder 160 is provided, the hole 150 extends in the Y-Y' direction through the bottom 140 and the cable holder 160 (see Figs. 2A and 2B). Where the cable holder 160 is not provided, the hole 150 extends in the Y-Y' direction through the bottom 140. In either case, the hole 150 is a hole generally shaped like a column (e.g., a generally circular- or polygonal-section column), extends in the Y-Y' direction, and has dimensions in a cross section along the X-X' and Z-Z' directions that are smaller than inner dimensions in a cross section along the X-X' and Z-Z' directions of the shell body 110.

Where the cable holder 160 is provided, the rear end of the cable holder 160 is a rear end of the shell 100. Where the cable holder 160 is not provided, an end on the Y'-direction side of the bottom 140 is the rear end of the shell 100. The bottom 140, the hole 150, and the cable holder 160 can be omitted, in which case a rear end on the Y'-direction side of the shell body 110 is the rear end of the shell 100.

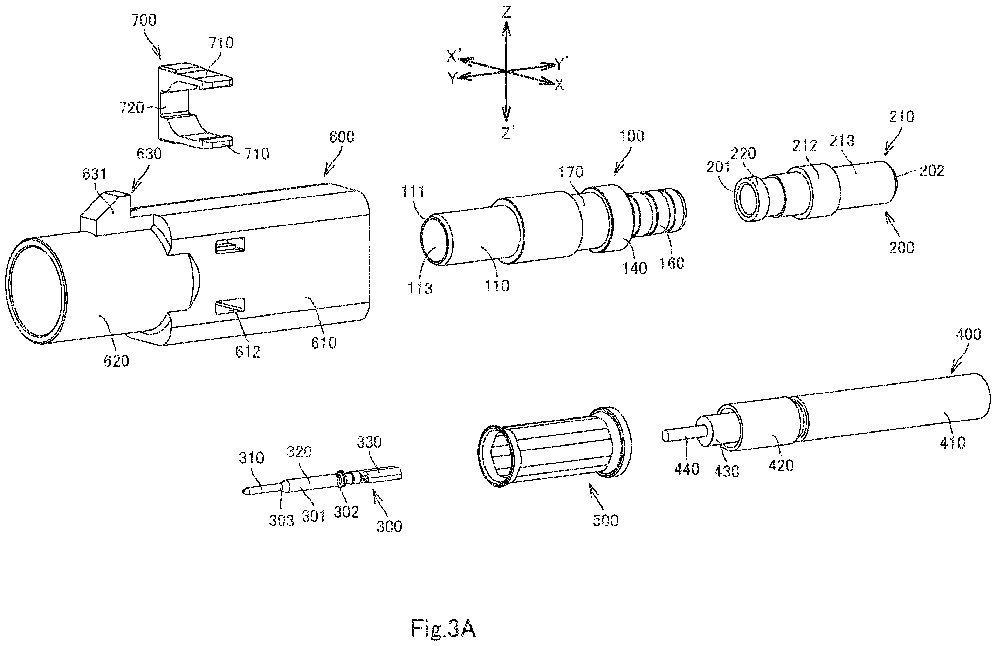

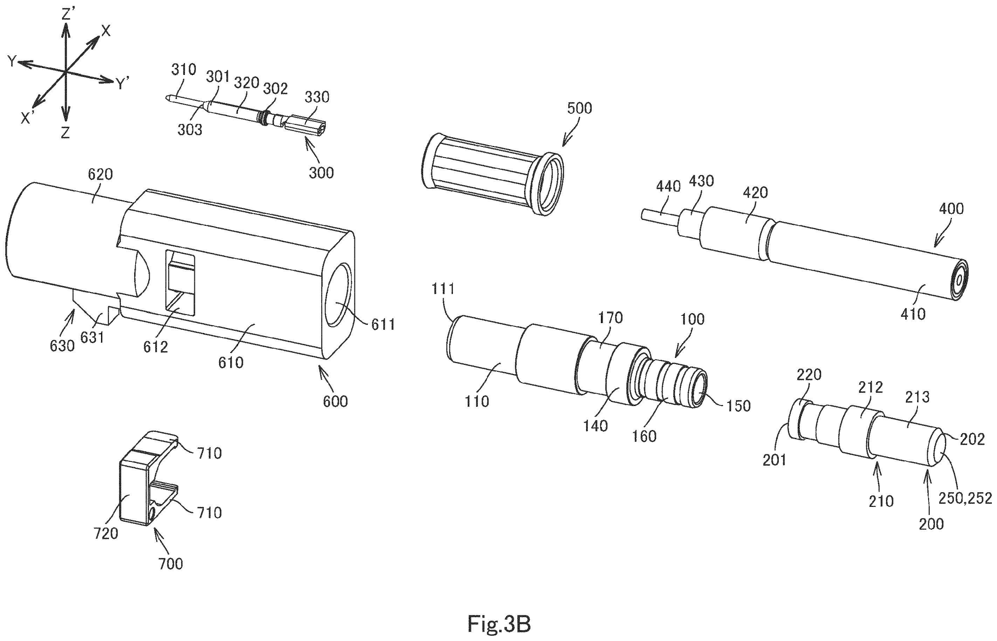

The shell 100 may further include an engagement groove 170 of a generally ringlike shape (see Figs. 3A to 3B). The engagement groove 170 is a recess of generally ringlike shape (generally circular or polygonal ringlike shape) provided in the outer peripheral face of the shell body 110. The engagement groove 170 is disposed such that a central axis of the engagement groove 170 substantially coincides with the central axis of the shell body 110, and the engagement groove 170 is recessed toward the central axis side of the shell body 110. The engagement groove 170 can be omitted.

The connector C1 further includes a body 200. The body 200 is constituted by a molded insulating resin insert-molded inside the shell body 110 of the shell 100. The body 200 is entirely housed in the shell body 110 and exposed from the shell body 110 in the Y direction.

The body 200 includes a main body 210. The main body 210 includes a distal portion 211, an intermediate portion 212, and a rear portion 213 (see Figs. 2A to 2B). The distal portion 211 of the main body 210 is generally shaped like a column (e.g., a generally circular- or polygonal-section column), extends in the Y direction from the intermediate portion 212, and is disposed inside the shell body 110. The intermediate portion 212 of the main body 210 is a portion between the distal portion 211 and the rear portion 213, is generally shaped like a column (e.g., a generally circular- or polygonal-section column), and is disposed inside the shell body 110. The rear portion 213 of the main body 210 is generally shaped like a column (e.g., a generally circular- or polygonal-section column), extends from the intermediate portion 212 in the Y' direction, and is disposed inside the shell body 110.

The body 200 may further include a tube 220 (see Figs. 2A to 3B). The tube 220 extends from the intermediate portion 212 in the Y direction and surrounds the distal portion 211 of the main body 210 with a generally ringlike clearance therebetween. As such, the tube 220 have inner dimensions in a cross section along the X-X' and Z-Z' directions that are larger than outer dimensions in a cross section along the X-X' and Z-Z' directions of the distal portion 211 of the main body 210. The tube 220 can be omitted.

Where the tube 220 is provided, an outer peripheral face of the intermediate portion 212 of the main body 210, an outer peripheral face of the rear portion 213 of the main body 210, and an outer peripheral face of the tube 220 together form an outer peripheral face of the body 200, and may be in intimate contact with the inner peripheral face 113 of the shell body 110. In this case, the intermediate portion 212 of the main body 210, the rear portion 213 of the main body 210, and the tube 220 each have outer dimensions in a cross section along the X-X' and Z-Z' directions that are equal to inner dimensions in a cross section along the X-X' and Z-Z' directions of the shell body 110.

Where the tube 220 is not provided, there may be a generally ringlike clearance between the distal portion 211 of the main body 210 and the shell body 110, or alternatively an outer peripheral face of the distal portion 211 of the main body 210 may be in intimate contact with the inner peripheral face 113 of the shell body 110. In the former case, the outer dimensions in a cross section along the X-X' and Z-Z' directions of the distal portion 211 of the main body 210 are smaller than the inner dimensions in a cross section along the X-X' and Z-Z' directions of the shell body 110, and the outer peripheral face of the intermediate portion 212 and the outer peripheral face of the rear portion 213 of the main body 210 together form the outer peripheral face of the body 200 and are in intimate contact with the inner peripheral face 113 of the shell body 110. In the latter case, the outer dimensions in a cross section along the X-X' and Z-Z' directions of the distal portion 211 of the main body 210 are equal to the inner dimensions in a cross section along the X-X' and Z-Z' directions of the shell body 110, and the outer peripheral face of the distal portion 211, the outer peripheral face of the intermediate portion 212, and the outer peripheral face of the rear portion 213 of the main body 210 together form the outer peripheral face of the body 200 and are in intimate contact with the inner peripheral face 113 of the shell body 110.

The body 200 has a first outermost end 201 and a second outermost end 202. The first outermost end 201 is an outermost end on the Y-direction side of the body 200. For example, where the tube 220 is provided, the first outermost end 201 may be a distal end on the Y-direction side of the tube 220 (see Figs. 2A and 2B), or alternatively may be a distal end (not illustrated) on the Y-direction side of the distal portion 211 of the main body 210. Where the tube 220 is not provided, the first outermost end 201 may be the distal end on the Y-direction side of the distal portion 211 of the main body 210. The second outermost end 202 is an outermost end on the Y'-direction side of the body 200. For example, the second outermost end 202 may be a rear end on the Y'-direction side of the rear portion 213 of the main body 210.

Where the bottom 140 and the cable holder 160 of the shell 100 are provided, or alternatively where the bottom 140 of the shell 100 is provided but the cable holder 160 thereof is not provided, the shell 100 and the body 200 may further have either configuration (1) or (2) as follows:
(1) The body 200 has a dimension in the Y-Y' direction that is smaller than that of the shell body 110 (see Figs. 1A to 3B). The first outermost end 201 of the body 200 is located on the Y'-direction side relative to the distal end 111 of the shell body 110, and the second outermost end 202 of the body 200 is in intimate contact with the first face 141 of the bottom 140 from the Y-direction side and is located on the Y-direction side relative to the rear end of the shell 100.
(2) The dimension in the Y-Y' direction of the body 200 is substantially equal to that of the shell body 110 (not illustrated). The first outermost end 201 of the body 200 is located at substantially the same position in the Y-Y' direction as the distal end 111 of the shell body 110, and the second outermost end 202 of the body 200 is in intimate contact with the first face 141 of the bottom 140 from the Y-direction side and is located on the Y-direction side relative to the rear end of the shell 100.

Where neither the bottom 140 nor the cable holder 160 of the shell 100 is provided, the shell 100 and the body 200 may further have one of the configurations (3) to (6) as follows:
(3) The dimension in the Y-Y' direction of the body 200 is smaller than that of the shell body 110 (not illustrated). The first outermost end 201 of the body 200 is located on the Y'-direction side relative to the distal end 111 of the shell body 110, and the second outermost end 202 of the body 200 is located on the Y'-direction side relative to the rear end of the shell body 110.
(4) The dimension in the Y-Y' direction of the body 200 is smaller than that of the shell body 110 (not illustrated). The first outermost end 201 of the body 200 is located on the Y'-direction side relative to the distal end 111 of the shell body 110, and the second outermost end 202 of the body 200 is located at substantially the same position in the Y-Y' direction as the rear end of the shell body 110.
(5) The dimension in the Y-Y' direction of the body 200 is smaller than that of the shell body 110 (not illustrated). The first outermost end 201 of the body 200 is located at substantially the same position in the Y-Y' direction as the distal end 111 of the shell body 110, and the second outermost end 202 of the body 200 is located on the Y-direction side relative to the rear end of the shell body 110.
(6) The dimension in the Y-Y' direction of the body 200 is substantially equal to that of the shell body 110 (not illustrated). The first outermost end 201 of the body 200 is located at substantially the same position in the Y-Y' direction as the distal end 111 of the shell body 110, and the second outermost end 202 of the body 200 is located at substantially the same position in the Y-Y' direction as the rear end of the shell body 110.

Where the shell 100 has the at least one ringlike groove 120, the body 200 further includes at least one ringlike protrusion 230 (see Figs. 2A to 3B). The at least one ringlike protrusion 230 may be a single protrusion or a plurality of protrusions in accordance with the number of the at least one ringlike groove 120.

For convenience of description, the at least one ringlike protrusion 230 will be hereinafter described as a single protrusion 230, but where a plurality of ringlike protrusions 230 is provided, each of them is configured similarly to the single ringlike protrusion 230.

The ringlike protrusion 230 is a ridge of generally ringlike shape (generally circular or polygonal ringlike shape) provided on the outer peripheral face of the body 200. The ringlike protrusion 230 is disposed such that a central axis of the ringlike protrusion 230 substantially coincides with the central axis of the shell body 110 of the shell 100. The ringlike protrusion 230 protrudes away from the central axis of the shell body 110 of the shell 100. In the other words, the ringlike protrusion 230 protrudes toward the ringlike groove 120 of the shell 100. The ringlike protrusion 230 fits in, and is in intimate contact with, the ringlike groove 120 of the shell 100. As such, the ringlike protrusion 230 have an outer shape and outer dimensions that correspond to an inner shape and inner dimensions, respectively, of the ringlike groove 120.

The ringlike protrusion 230 has a top face having a generally ringlike shape (e.g., a generally circular or polygonal ringlike shape), a first wall face on the Y-direction side having a generally ringlike shape, and a second wall face on the Y'-direction side having a generally ringlike shape. The top face of the ringlike protrusion 230 is in intimate contact with the bottom face of the ringlike groove 120, the first wall face of the ringlike protrusion 230 is in intimate contact with the first wall face of the ringlike groove 120, and the second wall face of the ringlike protrusion 230 is in intimate contact with the second wall face of the ringlike groove 120.

Where the shell 100 includes the at least one ringlike protrusion 130, the body 200 further includes at least one ringlike groove 240 (see Figs. 2A to 3B). The at least one ringlike groove 240 may be a single groove or a plurality of grooves in accordance with the number of the at least one ringlike protrusion 130.

For convenience of description, the at least one ringlike groove 240 will be hereinafter described as a single ringlike groove 240, but where a plurality of ringlike grooves 240 is provided, each of them is configured similarly to the single ringlike groove 240.

The ringlike groove 240 is a recess of generally ringlike shape (generally circular or polygonal ringlike shape) provided in the outer peripheral face of the body 200. The ringlike groove 240 is disposed such that a central axis of the ringlike groove 240 substantially coincides with the central axis of the shell body 110 of the shell 100, and the ringlike groove 240 is recessed toward the central axis of the shell body 110 of the shell 100. In the other words, the ringlike groove 240 is recessed relative to the ringlike protrusion 130 of the shell 100. The ringlike protrusion 130 of the shell 100 fits in, and is in intimate contact with, the ringlike groove 240. The ringlike groove 240 an inner shape and inner dimensions that correspond to an outer shape and outer dimensions, respectively, of the ringlike protrusion 130.

The ringlike groove 240 includes a bottom face having a generally ringlike shape (e.g., a generally circular or polygonal ringlike shape), a first wall face on the Y-direction side having a generally ringlike shape, and a second wall face on the Y'-direction side having a generally ringlike shape. The top face of the ringlike protrusion 130 is in intimate contact with the bottom face of the ringlike groove 240, the first wall face of the ringlike protrusion 130 is in intimate contact with the first wall face of the ringlike groove 240, and the second wall face of the ringlike protrusion 130 is in intimate contact with the second wall face of the ringlike groove 240.

The body 200 further includes a housing hole 250 (see Figs. 2A to 3B). The housing hole 250 is only required to extend through the body 200 in the Y-Y' direction. For example, the housing hole 250 may extend through the main body 210 in the Y-Y' direction. A central axis of the housing hole 250 may coincide with the central axis of the shell body 110.

The housing hole 250 may include a first hole 251 and a second hole 252. The first hole 251 is a hole generally shaped like a column (e.g., a generally circular- or polygonal-section column), extends in the Y-Y' direction, and opens in the Y direction. The second hole 252 is a hole extending from the first hole 251 in the Y' direction, communicates with the first hole 251, and opens in the Y' direction. The first hole 251 has dimensions in a cross section along the X-X' and Z-Z' directions that are smaller than those of the second hole 252.

The first hole 251 and the second hole 252 can be omitted. In this case, the housing hole 250 may be a hole generally shaped like a column (e.g., a generally circular- or polygonal-section column) and extend in the Y-Y' direction.

Where the shell 100 and the body 200 have configuration (1) or (2) described above, the housing hole 250 (specifically, if provided, the second hole 252 thereof) communicates with the hole 150 of the shell 100 (see Figs. 2A and 2B).

Where the shell 100 and the body 200 have one of configurations (3) to (6) described above, the housing hole 250 (specifically, if provided, the second hole 252 thereof) opens in the Y' direction (not illustrated).

The connector C1 further includes a terminal 300. The terminal 300 is constituted by an electrically conductive material (e.g., a metal or a carbon material such as a carbon nanotube). The first terminal 300a may be disposed such that an imaginary line (not illustrated) extending in the Y-Y' direction through the center of the first terminal 300a substantially coincides with the central axis of the shell body 110. Accordingly, the terminal 300 and the shell body 110 form a coaxial structure. The terminal 300 includes a distal portion 310, an intermediate portion 320, and a rear portion 330.

The intermediate portion 320 of the terminal 300 is a portion between the distal portion 310 and the rear portion 330. The intermediate portion 320 is constituted by, for example, a member having a generally tubular shape, such as a generally circular or polygonal tubular shape (a generally tubular shape with a generally circular or polygonal cross section along the Z-Z' and the X-X' directions), and extending in the Y-Y' direction (see Figs. 2A to 3B), a rod extending in the Y-Y' direction (not illustrated), a plate extending in the Y-Y' direction (not illustrated), or the like. The intermediate portion 320 is at least partly housed and retained in the housing hole 250 of the body 200. Where the housing hole 250 of the body 200 includes the first hole 251 and the second hole 252, the intermediate portion 320 is at least partly housed securely in the first hole 251 of the body 200. The intermediate portion 320 has an outer shape in a cross section along the X-X' and Z-Z' directions that is substantially the same as a shape in a cross section along the X-X' and Z-Z' directions of the housing hole 250 (specifically, if provided, the first hole 251 thereof) of the body 200, and the intermediate portion 320 has outer dimensions in a cross section along the X-X' and Z-Z' directions that are substantially equal to, or slightly smaller than, dimensions in a cross section along the X-X' and Z-Z' directions of the housing hole 250 (specifically, if provided, the first hole 251 thereof) of the body 200.

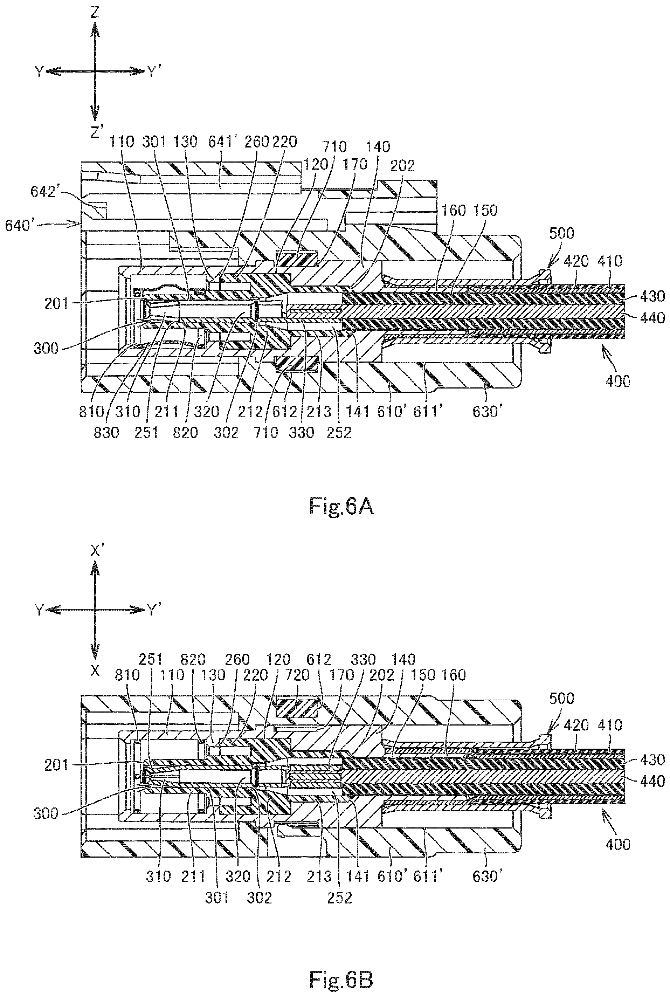

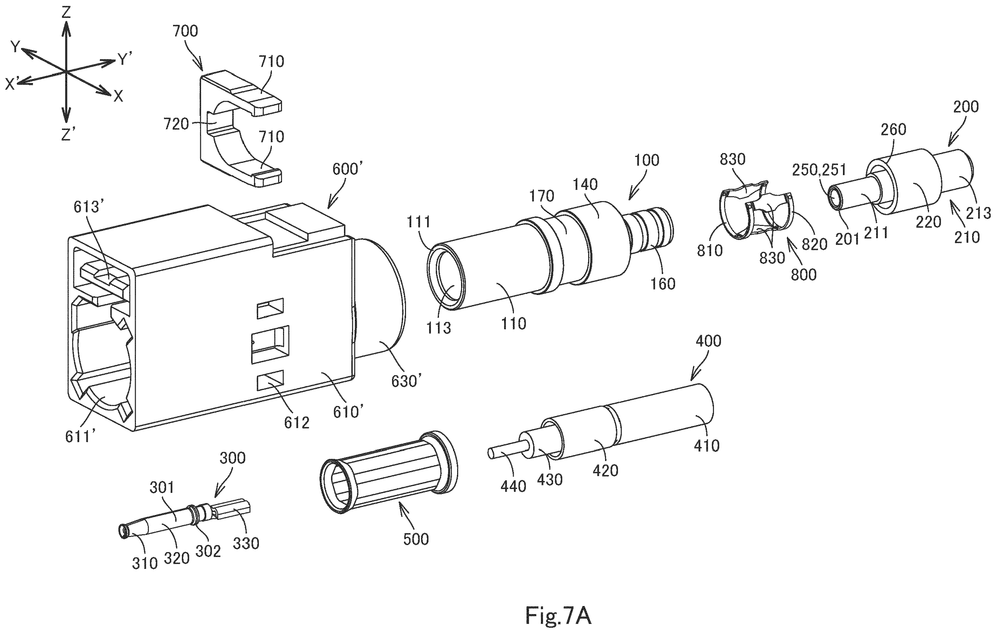

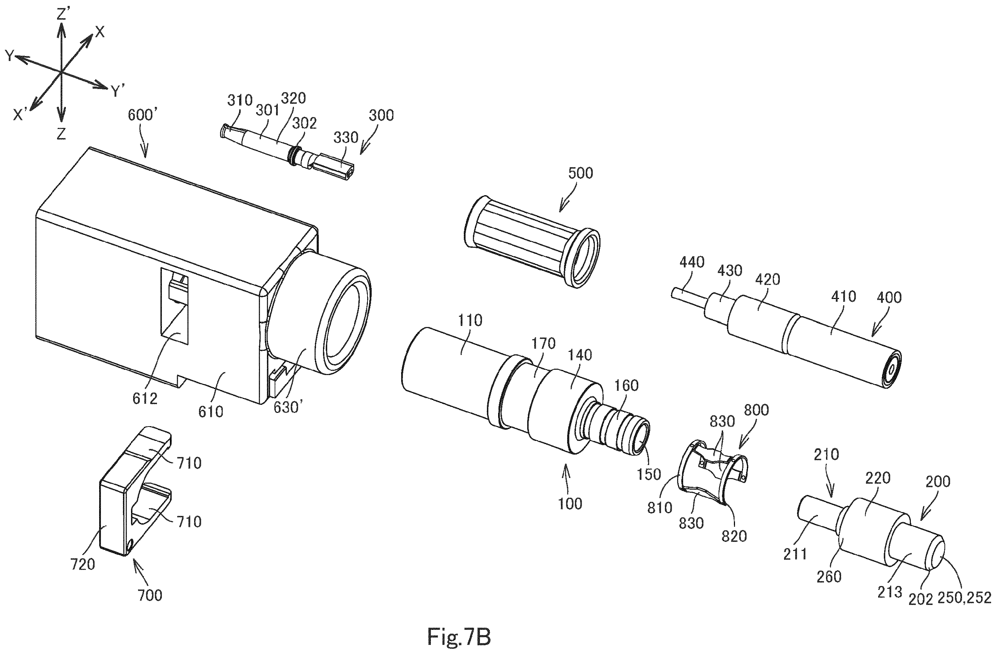

The distal portion 310 of the terminal 300 is constituted by a member having a generally tubular shape, such as a generally circular or polygonal tubular shape (a generally tubular shape with a generally circular or polygonal cross section along the Z-Z' and the X-X' directions), and extending from the intermediate portion 320 in the Y direction (see Figs. 2A to 3B), a pair of beams extending from the intermediate portion 320 in the Y direction (see Figs. 7A and 7B to be described), a rod (not illustrated) extending from the intermediate portion 320 in the Y direction, a plate (not illustrated) extending from the intermediate portion 320 in the Y direction, or the like. The distal portion 310 may protrude in the Y direction from the housing hole 250 of the body 200 and be disposed inside the shell body 110 (see Figs. 2A to 2B), or alternatively may be disposed in the housing hole 250 of the body 200 and exposed in the Y direction from the housing hole 250 (see Figs. 6A and 6B to be described).

The rear portion 330 of the terminal 300 is constituted by a member having a generally tubular shape, such as a generally circular or polygonal tubular shape (a generally tubular shape with a generally circular or polygonal cross section along the Z-Z' and the X-X' directions), and extending from the intermediate portion 320 in the Y' direction(see Figs. 2A to 3B), a rod (not illustrated) from the intermediate portion 320 extending in the Y' direction, a plate (not illustrated) extending from the intermediate portion 320 in the Y' direction, or the like.

Where the shell 100 and the body 200 have configuration (1) or (2) described above, the rear portion 330 is disposed in the housing hole 250 (specifically, if provided, the second hole 252 thereof) of the body 200 (see Figs. 2A and 2B).

Where the shell 100 and the body 200 have one of configurations (3) to (6) described above, the rear portion 330 may be disposed in the housing hole 250 (specifically, if provided, the second hole 252 thereof) of the body 200 (not illustrated), or alternatively may protrude in the Y' direction from the housing hole 250 (specifically, if provided, the second hole 252 thereof) of the body 200 and be disposed inside the shell body 110 (not illustrated).

The terminal 300 may further include a first portion 301. The first portion 301 is a portion in the Y-Y' direction of the terminal 300. The first portion 301 is provided in the distal portion 310, the intermediate portion 320, or the rear portion 330 of the terminal 300.

The terminal 300 may further include at least one second portion 302 and/or at least one third portion 303. For convenience of description, the at least one second portion 302 will be hereinafter described as a single second portion 302, but where a plurality of second portions 302 is provided, each of them is configured similarly to the single second portion 302. Also, the at least one third portion 303 will be hereinafter described as a single third portion 303, but where a plurality of third portions 303 is provided, each of them is configured similarly to the single third portion 303.

The second portion 302 is another portion in the Y-Y' direction of the terminal 300 that does not include the first portion 301, and is higher in impedance than the first portion 301. The second portion 302 is provided in the distal portion 310, the intermediate portion 320, or the rear portion 330 of the terminal 300. Among various factors causing the higher impedance of the second portion 302 than the first portion 301, a main factor is that the second portion 302 has outer dimensions in a cross section along the X-X' and Z-Z' directions that are larger than those of the first portion 301. The larger the outer dimensions in a cross section along the X-X' and Z-Z' directions of the second portion 302 are, the higher the impedance of the second portion 302 is.

The third portion 303 is another portion in the Y-Y' direction of the terminal 300 that does not include the first portion 301, and is lower in impedance than the first portion 301. Where the second portion 302 and the third portion 303 are provided, the second portion 302 and the third portion 303 are different portions in the Y-Y' direction of the terminal 300. The third portion 303 is provided in the distal portion 310, the intermediate portion 320, or the rear portion 330 of the terminal 300. Among various factors causing the lower impedance of the third portion 303 than the first portion 301, a main factor is that the third portion 303 has outer dimensions in a cross section along the X-X' and Z-Z' directions that are smaller than those of the first portion 301. The smaller the outer dimensions in a cross section along the X-X' and Z-Z' directions of the second portion 302 are, the lower the impedance of the second portion 302 is.

A possible way to find out a portion with a higher impedance (the second portion 302) and/or a portion with a lower impedance (the third portion 303) in the Y-Y' direction of the terminal 300 is to input CAD data of the connector C1 to a high frequency simulator in order to build a model, and then to conduct a simulation based on the information of the model or other information. Examples of the high frequency simulators include Femtet (registered trademark), which is an application program made by Murata Software Co., Ltd., and Ansys HFSS ("Ansys" is a registered trademark), which is an application program made by ANSYS, Inc.

Where the ringlike groove 120 of the shell 100 is provided, the ringlike groove 120 surrounds, and is recessed away from, the second portion 302 of the terminal 300 (see Figs. 2A and 2B). With increasing a depth dimension of the ringlike groove 120 (a linear distance in a direction orthogonal to the Y-Y' direction (hereinafter referred to as an "orthogonal direction") from the inner peripheral face 113 of the shell body 110 of the shell 100 to the bottom face of the ringlike groove 120), a linear distance in the orthogonal direction from the bottom face of the ringlike groove 120 to the second portion 302 of the terminal 300 increases so as to lower the impedance of the second portion 302 of the terminal 300. Accordingly, the depth dimension of the ringlike groove 120 may be determined in accordance with the impedance of the second portion 302 of the terminal 300. For example, CAD data of the connector C1 with different depth dimensions of the ringlike groove 120 may be input to the high frequency simulator to build models, and a plurality of sets of simulation may be conducted based on the information of the models and other information to determine the depth dimension of the ringlike groove 120 such that the impedance of the second portion 302 of the terminal 300 is substantially the same as, or close to, the impedance of the first portion 301 of the terminal 300. In addition to the setting of the depth dimension of the ringlike groove 120, it is possible to alter a shape of a portion of the body 200 that is located around the second portion 302 of the terminal 300 so that the impedance of the second portion 302 of the terminal 300 is substantially the same as, or close to, the impedance of the first portion 301 of the terminal 300.

Where the ringlike protrusion 130 of the shell 100 is provided, the ringlike protrusion 130 surrounds, and protrude toward, the third portion 303 of the terminal 300 (see Figs. 2A and 2B). With increasing a height dimension of the ringlike protrusion 130 (a linear distance in a direction orthogonal to the Y-Y' direction from the inner peripheral face 113 of the shell body 110 of the shell 100 to the top face of the ringlike protrusion 130), a linear distance in the orthogonal direction from the top face of the ringlike protrusion 130 to the third portion 303 of the terminal 300 decreases so as to raise the impedance of the third portion 303 of the terminal 300. Accordingly, the height dimension of the ringlike protrusion 130 may be determined in accordance with the impedance of the third portion 303 of the terminal 300. For example, CAD data of the connector C1 with different height dimensions of the ringlike protrusion 130 may be input to the high frequency simulator to build models, and a plurality of sets of simulation may be conducted based on the information of the models and other information to determine the height dimension of the ringlike protrusion 130 such that the impedance of the third portion 303 of the terminal 300 is substantially the same as, or close to, the impedance of the first portion 301 of the terminal 300. In addition to the setting of the height dimension of the ringlike protrusion 130, it is possible to alter a shape of a portion of the body 200 that is located around the third portion 303 of the terminal 300 so that the impedance of the third portion 303 of the terminal 300 is substantially the same as, or close to, the impedance of the first portion 301 of the terminal 300.

Even where the second portion 302 of the terminal 300 is provided, the ringlike groove 120 of the shell 100 can be omitted. Where the ringlike groove 120 of the shell 100 is omitted, the ringlike protrusion 230 of the body 200 is also omitted. Even where the third portion 303 of the terminal 300 is provided, the ringlike protrusion 130 of the shell 100 can be omitted. Where the ringlike protrusion 130 of the shell 100 is omitted, the ringlike groove 240 of the body 200 is also omitted. The second portion 302 of the terminal 300 can be omitted. In this case, the ringlike groove 120 of the shell 100 and the ringlike protrusion 230 of the body 200 can, but is not required to, be omitted. The third portion 303 of the terminal 300 can be omitted. In this case, the ringlike protrusion 130 of the shell 100 and the ringlike groove 240 of the body 200 can, but is not required to, be omitted.

The connector C1 further includes a cable 400. The cable 400 is partly received inside the shell body 110 from the Y'-direction side and connected to the rear portion 330 of the terminal 300 inside the shell body 110.

The cable 400 is a coaxial cable. The cable 400 includes an outer insulator 410, an outer conductor 420, an inner insulator 430, and an inner conductor 440.

The outer insulator 410 is a generally tubular jacket constituted by an insulating material. The outer conductor 420 is a generally tubular member constituted by a conductor, such as a copper wire mesh, and is disposed inside the outer insulator 410. In other words, the outer conductor 420 is covered by the outer insulator 410. The outer conductor 420 includes a distal portion on the Y-direction side. The distal portion of the outer conductor 420 protrudes from the outer insulator 410 in the Y direction.

The inner insulator 430 is a tube constituted by an insulating material and is disposed inside the outer conductor 420. The inner insulator 430 includes a distal portion on the Y-direction side. The distal portion of the inner insulator 430 protrudes from the outer conductor 420 in the Y direction. The inner conductor 440 is a metal wire, such as a copper wire, and is disposed inside the inner insulator 430. The inner conductor 440 includes a distal portion on the Y-direction side. The distal portion of the inner conductor 440 protrudes from the inner insulator 430 in the Y direction.

Where the shell 100 and the body 200 have configuration (1) or (2) described above, the distal portion of the inner insulator 430 of the cable 400 has an outer shape in a cross section along the X-X' and Z-Z' directions that is substantially the same as a shape in a cross section along the X-X' and Z-Z' directions of the hole 150 of the shell 100, and the distal portion of the inner insulator 430 of the cable 400 has outer dimensions in a cross section along the X-X' and Z-Z' directions that are substantially equal to, or slightly smaller than, the dimensions in a cross section along the X-X' and Z-Z' directions of the hole 150 of the shell 100 (see Figs. 2A and 2B). The distal portion of the inner insulator 430 of the cable 400 fits in the hole 150 of the shell 100. The distal portion of the inner conductor 440 of the cable 400 is received in the housing hole 250 (specifically, if provided, the second hole 252 thereof) of the body 200 and is connected to the rear portion 330 of the terminal 300 in the housing hole 250 (specifically, if provided, the second hole 252 thereof). Where the cable holder 160 of the shell 100 is provided, the distal portion of the outer conductor 420 of the cable 400 fits over, and is connected to, the cable holder 160 (see figs. 2A and 2B). Where the cable holder 160 of the shell 100 is not provided, the distal portion of the outer conductor 420 of the cable 400 is in contact with, and connected to, the shell 100 (not illustrated).

Where the shell 100 and the body 200 have one of configurations (3) to (6) described above and the rear portion 330 of the terminal 300 is disposed in the housing hole 250 (specifically, if provided, the second hole 252 thereof) of the body 200 (not illustrated), the distal portion of the inner insulator 430 of the cable 400 and the distal portion of the inner conductor 440 of the cable 400 are received inside the shell body 110 of the shell 100 from the Y'-direction side, and the distal portion of the inner conductor 440 of the cable 400 is connected to the rear portion 330 of the terminal 300 in the housing hole 250 (specifically, if provided, the second hole 252 thereof) of the body 200. The distal portion of the outer conductor 420 of the cable 400 may be in contact with, and connected to, the shell body 110.

Where the shell 100 and the body 200 have one of configurations (3) to (6) described above and the rear portion 330 of the terminal 300 protrudes from the housing hole 250 (specifically, if provided, the second hole 252 thereof) of the body 200 in the Y' direction (not illustrated), the distal portion of the inner insulator 430 of the cable 400 and the distal portion of the inner conductor 440 of the cable 400 are received inside the shell body 110 of the shell 100 from the Y'-direction side, and the distal portion of the inner conductor 440 of the cable 400 is connected to the rear portion 330 of the terminal 300 inside the shell body 110. The distal portion of the outer conductor 420 of the cable 400 may be in contact with, and connected to, the shell body 110.

Where the cable holder 160 of the shell 100 is provided, the connector C1 may further include a conductive ring 500 (see Figs. 1A to 3B). The conductive ring 500 is constituted by a conductor (e.g., a metal or the like material) shaped into a ring shape. The conductive ring 500 fits over the distal portion of the outer conductor 420 of the cable 400, which fits over the cable holder 160, and a distal portion on the Y-direction side of the outer insulator 410 of the cable 400. The thus arranged conductive ring 500 is fixed to the cable holder 160 via the distal portion of the outer conductor 420, and also fixed to the distal portion of the outer insulator 410 of the cable 400. The conductive ring 500 may be, but is not required to, be at least partly swaged so as to be fixed to the cable holder 160 via the outer conductor 420 and to be fixed to the distal portion of the outer insulator 410 of the cable 400. The conductive ring 500 can be omitted.

The connector C1 may further include a housing 600 (see Figs. 1A to 3B). The housing 600 is constituted by an insulating material (e.g., an insulating resin or the like). The housing 600 includes a housing body 610 and a connecting portion 620. The housing body 610 has a generally rectangular tube (a generally tubular shape with a generally rectangular cross section along the Z-Z' and the X-X' directions) extending in the Y-Y' direction. The housing body 610 includes a housing space 611 therein. The housing space 611 extends in the Y-Y' direction through the housing body 610. The connecting portion 620 is a generally tubular member extending from the housing body 610 in the Y direction. The inside of the connecting portion 620 communicates with the housing space 611 of the housing body 610.

A portion on the Y'-direction side of the shell 100 is securely housed in the housing space 611 of the housing body 610. A portion on the Y-direction side of the shell 100 is disposed in the connecting portion 620. Where the conductive ring 500 is provided, the conductive ring 500 is disposed in the housing space 611, and the cable 400 is led out of the housing space 611 in the Y' direction. Where the conductive ring 500 is not provided, the cable 400 is led out of the housing space 611 in the Y' direction.

An engagement hole 612 may be provided in a wall on the X'-direction side of the housing body 610. The engagement hole 612 includes a first hole on the Z-direction side, a second hole on the Z'-direction side, a coupling groove, a first engaging portion on the Z-direction side, and a second engaging portion on the Z'-direction side. The first hole and the second hole are provided in the wall on the X'-direction side of the housing body 610, extend in the X direction, are located on the Z-direction side and the Z'-direction side, respectively, relative to the housing space 611, communicate with the housing space 611, and open in the X direction. The coupling groove is provided in the wall on the X'-direction side of the housing body 610 and extends from the first hole to the second hole. The first engaging portion is an edge on the Z'-direction side of an opening on the X-direction side of the first hole, a protrusion on the edge, or the like. The second engaging portion is an edge on the Z-direction side of an opening on the X-direction side of the second hole, a protrusion on the edge, or the like.

The housing 600 may further include a locking portion 630. The locking portion 630 extends from the housing body 610 and along the connecting portion 620 in the Y direction. The locking portion 630 is provided with a protrusion 631 protruding in the Z direction.

Where the engagement groove 170 of the shell body 110 of the shell 100 and the engagement hole 612 of the housing 600 are provided, the connector C1 may further include a retainer 700 (see Figs. 1A to 3B). The retainer 700 is a substantially C-shaped member and includes first and second engagement arms 710 and a coupling portion 720. A distance in the Z-Z' direction between the first and second engagement arms 710 is slightly smaller than that from a portion on the Z-direction side to a portion on the Z'-direction side of a bottom of the engagement groove 170. The first engagement arm 710 extends in the X direction from an end on the Z-direction side of the coupling portion 720, and includes a free end portion with a claw protruding to the Z'-direction side. The second engagement arm 710 extends in the X direction from an end on the Z'-direction side of the coupling portion 720, and includes a free end portion with a claw protruding to the Z-direction side. The coupling portion 720 is received in the coupling groove of the engagement hole 612 of the housing 600. The first engagement arm 710 is received in the first hole of the engagement hole 612 of the housing 600, and the claw of the first engagement arm 710 is hooked on the first engaging portion of the engagement hole 612. The second engagement arm 710 is received in the second hole of the engagement hole 612 of the housing 600, and the claw of the second engagement arm 710 is hooked on the second engaging portion of the engagement hole 612. The first and second engagement arms 710 thus elastically retain the shell body 110 therebetween and are fixed to the housing 600.

Even where the engagement hole 612 of the housing 600 and the retainer 700 are provided, the engagement groove 170 of the shell 100 can be omitted. In this case, the retainer 700 is only required to elastically retain the shell body 110. Further, it is possible to omit the engagement groove 170 of the shell 100, the engagement hole 612 of the housing 600, and the retainer 700. It is also possible to omit the entire housing 600 along with the omission of the engagement groove 170 of the shell 100 and the retainer 700.

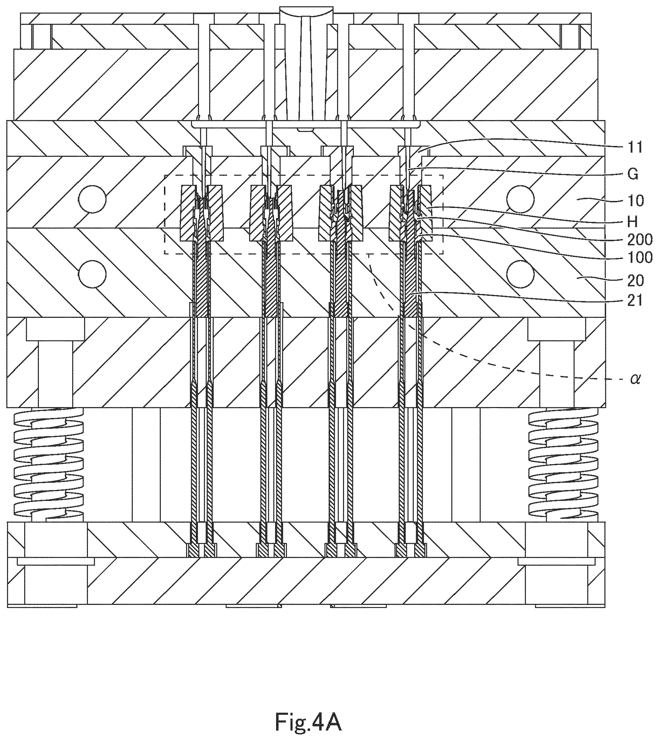

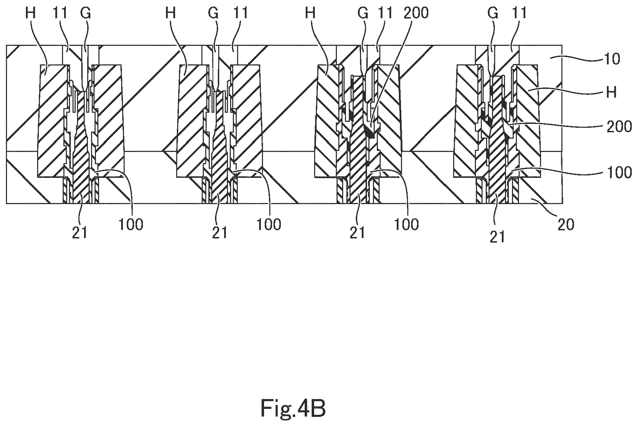

A non-limiting manufacturing method of the connector C1 will be hereinafter described in detail. Fig. 4A illustrates a molding device for insert-molding the body 200 inside the shell body 110 of the shell 100, and Fig. 4B is an enlarged view of a portion α of the molding device.

First, the shell 100 is prepared including the shell body 110, the bottom 140, the hole 150, and the cable holder 160. Also prepare is a shell retainer H having a generally tubular shape and extending in the Y-Y' direction. The shell 100 is fitted into the shell retainer H. In other words, the shell retainer H is fitted over the shell 100.

A first mold 10 and a second mold 20 of the molding device are closed together, and the shell retainer H and the shell 100 are housed in a cavity of the first mold 10 and the second mold 20 (see Figs. 4A and 4B). The first mold 10 includes a first insert 11, and the second mold 20 includes a second insert 21.

Where the first outermost end 201 of the body 200 is located on the Y'-direction side relative to the distal end 111 of the shell body 110, when the first mold 10 and the second mold 20 are closed together, the first insert 11 is inserted into the shell body 110 from the Y-direction side to block the shell body 110 with the first insert 11 from the Y-direction side, and the second insert 21 is inserted into the hole 150 and the shell body 110 of the shell 100 from the Y'-direction side to bring the second insert 21 into abutment with the first insert 11 and to block the shell body 110 with the second insert 21 from the Y'-direction side. As a result, the shell body 110, the first insert 11, and the second insert 21 define an injection space, and a gate G in the first insert 11 is brought into communication with the injection space. The injection space corresponds to a shape and size of the body 200 according to one of the above aspects. A portion of the second insert 21 that is inserted into the shell body 110 corresponds to a shape and size of the housing hole 250 of the body 200. A portion of the second insert 21 that is inserted into in the hole 150 fits in the hole 150, so that the shell body 110 is blocked with the second insert 21 from the Y'-direction side. The gate G is a pin gate and includes an injection port to be disposed inside the shell body 110 and communicate with the injection space. The injection port of the gate G may communicate with a portion of the injection space that corresponds to a distal face of the distal portion 211 of the main body 210 of the body 200 according to one of the above aspects. Alternatively, the injection port may communicate with a portion of the injection space that corresponds to the first outermost end 201, which is not the distal face of the distal portion 211 of the main body 210, of the body 200.

Where the first outermost end 201 of the body 200 is located at substantially the same position in the Y-Y' direction as the distal end 111 of the shell body 110, when the molds are closed together, the first insert 11 may not be inserted into the shell body 110 of the shell 100 but block the shell body 110 of the shell 100 from the Y-direction side.

Where the inner peripheral face 113 of the shell body 110 is provided with the ringlike groove 120, the ringlike groove 120 forms part of the injection space. Where the inner peripheral face 113 of the shell body 110 is provided with the ringlike protrusion 130, the ringlike protrusion 130 is disposed in the injection space.

Where the cable holder 160 is omitted, when the molds are closed together, the second insert 21 may be inserted into the hole 150 of the bottom 140 and the shell body 110 of the shell 100 from the Y'-direction side to abut on the first insert 11 and to block the shell body 110 from the Y'-direction side. Also in this case, the portion of the second insert 21 that is inserted into in the hole 150 fits in the hole 150.

Where the bottom 140, the hole 150, and the cable holder 160 are omitted, when the molds are closed together, the second insert 21 may be inserted into the shell body 110 of the shell 100 from the Y'-direction side to abut on the first insert 11 and to block the shell body 110 from the Y'-direction side. In this case, the second insert 21 includes a portion to be inserted into the shell body 110 and a portion to block the shell body 110 from the Y'-direction side.

The shell retainer H can be omitted. In this case, when the molds are closed together, the cavity may house only the shell 100 according to one of the above aspects.

After the molds are closed together, a molten resin is injected through the gate G and charged into the injection space. The charged molten resin thus adheres to the inner peripheral face 113 of the shell body 110. Where the bottom 140 is provided, the charged molten resin also adheres to the first face 141 of the bottom 140. Where the ringlike groove 120 is provided, the molten resin is charged also into the ringlike groove 120 and adheres also to the bottom face, the first wall face, and the second wall face of the ringlike groove 120. Where the ringlike protrusion 130 is provided, the filled molten resin adheres also to the top face, the first wall face, and the second wall face of the ringlike protrusion 130.

After the molten resin is charged, the molten resin is solidified by cooling or other means. As a result, the solidified molten resin becomes the body 200 insert-molded inside the shell body 110. Where the ringlike groove 120 is provided, a portion of the solidified molten resin that is located in the ringlike groove 120 becomes the ringlike protrusion 230 of the body 200 fitting into the ringlike groove 120. Where the ringlike protrusion 130 is provided, the solidified molten resin is formed with a recess having a shape corresponding to the ringlike protrusion 130 and becoming the ringlike groove 240 of the body 200.

After the molten resin is solidified, the first mold 10 and the second mold 20 are opened apart from each other, and the first insert 11 and the second insert 21 are removed from the shell 100 and the body 200. At this time, the portion of the second insert 21 that has been inserted in the shell body 110 is removed from the body 200, so that the housing hole 250 is formed in the body 200. Where the shell 100 is provided with the bottom 140, the hole 150, and the cable holder 160, or alternatively where the shell 100 is provided with the bottom 140 and the hole 150 but not the cable holder 160, the housing hole 250 in the body 200 communicates with the hole 150. Where neither the bottom 140, the hole 150, nor the cable holder is provided, the housing hole 250 in the body 200 opens in the Y' direction through the shell body 110.

Before or after the body 200 is insert-molded, the terminal 300 and the cable 400 are prepared. The distal portion of the inner conductor 440 of the cable 400 is connected to the rear portion 330 of the terminal 300. Where the conductive ring 500 is provided, the distal portion of the outer conductor 420 of the cable 400 is inserted into the conductive ring 500. Where the conductive ring 500 is not provided, this insertion step is omitted.

Where the shell 100 is provided with the bottom 140, the hole 150, and the cable holder 160, the terminal 300 connected to the cable 400 is inserted from the hole 150 of the shell 100 into the housing hole 250 of the body 200. Thus the distal portion 310 of the terminal 300 is disposed in the housing hole 250 of the body 200 and exposed to the Y-direction side, or alternatively the distal portion 310 of the terminal 300 protrudes in the Y direction out of the housing hole 250 of the body 200 and is disposed inside the shell body 110 of the shell 100. The intermediate portion 320 of the terminal 300 is disposed, and at least partly retained, in the housing hole 250 of the body 200. The rear portion 330 of the terminal 300 is disposed in the housing hole 250 of the body 200. Following the terminal 300, the distal portion of the inner conductor 440 of the cable 400 is inserted from the hole 150 of the shell 100 into the housing hole 250 of the body 200 and disposed in the housing hole 250. Where the terminal 300 is provided with the second portion 302, when the terminal 300 is retained in the housing hole 250 of the body 200, the second portion 302 is disposed inside the ringlike groove 120 of the shell 100. Where the terminal 300 is provided with the third portion 303, when the terminal 300 is retained in the housing hole 250 of the body 200, the third portion 303 is disposed inside the ringlike protrusion 130 of the shell 100. The distal portion of the inner insulator 430 of the cable 400 is fitted in the hole 150 of the shell 100 to block the hole 150. The distal portion of the outer conductor 420 of the cable 400 is fitted over the cable holder 160. Where the conductive ring 500 is provided, the conductive ring 500 is placed to surround the cable holder 160 by fitting the distal portion of the outer conductor 420 of the cable 400 over the cable holder 160. The conductive ring 500 is partly swaged and thereby brought into pressure contact with the cable holder 160 via the distal portion of the outer conductor 420 of the cable 400. The conductive ring 500 is thus fixed to the cable holder 160 via the distal portion of the outer conductor 420 of the cable 400, and the distal portion of the outer conductor 420 of the cable 400 is electrically connected to the cable holder 160. Where the conductive ring 500 is not provided, the distal portion of the outer conductor 420 of the cable 400 is electrically connected to the cable holder 160 by fitting the distal portion of the outer conductor 420 of the cable 400 over the cable holder 160.

Where the shell 100 is provided with the bottom 140 and the hole 150 but not the cable holder 160, as described above, the terminal 300 is inserted from the hole 150 of the shell 100 into the housing hole 250 of the body 200, the distal portion of the inner conductor 440 of the cable 400 is inserted from the hole 150 of the shell 100 into the housing hole 250 of the body 200, and the distal portion of the inner insulator 430 of the cable 400 is fitted in the hole 150 of the shell 100 to block the hole 150. The distal portion of the outer conductor 420 of the cable 400 may or may not be brought into contact and electrical connection with the shell 100.

Where the shell 100 is provided with neither the bottom 140, the hole 150, nor the cable holder 160, the terminal 300 connected to the cable 400 is inserted from the shell body 110 of the shell 100 into the housing hole 250 of the body 200. Thus the distal portion 310 of the terminal 300 is disposed in the housing hole 250 of the body 200 and exposed to the Y-direction side, or alternatively the distal portion 310 of the terminal 300 protrudes in the Y direction out of the housing hole 250 of the body 200 and is disposed inside the shell body 110 of the shell 100. The intermediate portion 320 of the terminal 300 is disposed, and at least partly retained, in the housing hole 250 of the body 200. The rear portion 330 of the terminal 300 is disposed in the housing hole 250 of the body 200. Following the terminal 300, the distal portion of the inner conductor 440 of the cable 400 is inserted from the shell body 110 of the shell 100 into the housing hole 250 of the body 200 and disposed in the housing hole 250. The distal portion of the outer conductor 420 of the cable 400 may or may not be brought into contact and electrical connection with the shell 100.

Where the housing 600 is provided, the housing 600 is prepared after the terminal 300 and the cable 400 are assembled into the shell 100. The shell 100 is then inserted from the Y'-direction side into the housing space 611 of the housing 600. As a result, the portion on the Y-direction side of the shell 100 is inserted from the housing space 611 into the connecting portion 620, and the portion on the Y'-direction side of the shell 100 is securely housed in the housing space 611 of the housing body 610.

Thereafter, the retainer 700 is prepared. The first and second engagement arms 710 of the retainer 700 are inserted from the X'-direction side into the first and second holes, respectively, of the engagement hole 612 of the housing 600. Then, the first and second engagement arms 710 are inserted into the portion on the Z-direction side and the portion on the Z'-direction side, respectively, of the engagement groove 170 of the shell body 110 of the shell 100 and elastically retain the shell body 110 therebetween, and the claws of the first and second engagement arms 710 are hooked onto the first and second engaging portions, respectively, of the engagement hole 612. In this way, the first and second engagement arms 710 of the retainer 700 are fixed to the housing 600, and the shell body 110 is fixed to the housing 600. This is how the connector C1 is manufactured.

Where the housing 600 is provided but the retainer 700 is not provided, the step of attaching the retainer 700 to the housing 600 can simply be omitted. Where neither the housing 600 nor the retainer 700 are provided, the step of assembling the shell 100 and other components into the housing 600 and the step of attaching the retainer 700 to the housing 600 can simply be omitted.

The connector C1 and the method for manufacturing the connector C1 provides technical features and effects (1) to (7) as follows.

Technical features and effects (1): The connector C1 has improved EMI characteristics for the following reasons. The body 200 is insert-molded, and entirely housed, inside the shell body 110. The intermediate portion 320 of the terminal 300 is at least partly retained in the housing hole 250 of the body 200, and the terminal 300 is entirely disposed inside the shell body 110. The cable 400 is connected to the rear portion 330 of the terminal 300 inside the shell body 110. As such, the entire terminal 300 and the part where the terminal 300 and the cable 400 are connected together are disposed inside the shell body 110 and shielded by the shell body 110, resulting in improved EMI characteristics of the connector C1. Moreover, where the shell body 110 is provided with neither a joint, a notch, nor a through hole, The connector C1 has further improved EMI characteristics.

Technical features and effects (2): The connector C1 is easy to manufacture for the following reasons. The body 200 can be insert-molded in the shell body 110 because the body 200 is disposed inside the shell body 110 and exposed to the Y-direction side. Since the body 200 is insert-molded in the shell body 110, it is advantageously possible to omit the step of assembling the body 200 into the shell body 110. The body 200 is provided with the housing hole 250, and simply by inserting the terminal 300 into the housing hole 250, the intermediate portion 320 of the terminal 300 is at least partly retained by the body 200. It is therefore easy to assemble the terminal 300 into the body 200. Hence the connector C1 is easy to manufacture.

Technical features and effects (3): If the body 200 was configured to be received in, and retained by, the shell body 110 of the shell 100, a fine air layer or layers may be generated in an interface between the body 200 and the shell body 110. The presence of the air layer or layers on the periphery of a part of the terminal 300 may cause an increase in impedance of the part of the terminal 300. The presence of the air layer or layers may cause an enlarged clearance between the body 200 and the shell body 110 of the shell 100, which may result in wobbling, positional displacement, or the like of the body 200 inside the shell body 110. In contrast, the connector C1 is configured such that the body 200 is insert-molded inside the shell body 110, with the outer peripheral face of the body 200 in intimate contact with the shell body 110. This configuration reduces the possibility of the above-described generation of air layer or layers, facilitating the impedance adjustment of the terminal 300. In addition, this configuration also results in a reduced clearance between the body 200 and the shell body 110 of the shell 100, advantageously suppressing wobbling, positional displacement, or the like of the body 200 inside the shell body 110.

Technical features and effects (4): Where the shell 100 is provided with the at least one ringlike groove 120 and the terminal 300 is provided with the first portion 301 and the at least one second portion 302 having an impedance higher than that of the first portion 301, it is easy to adjust the impedance of the terminal 300. Since the or each ringlike groove 120 surrounds, and is recessed away from, the or a corresponding second portion 302 of the terminal 300, the impedance of the or each second portion 302 can be lowered such as to be substantially the same or close to the impedance of the first portion 301 of the terminal 300. Moreover, where the shell 100 is fabricated by a machining process, the at least one ringlike groove 120 can be fabricated with high precision in terms of dimensions, positions, etc. This allows the at least one second portion 302 to be adjusted in impedance adjustment with high precision.

Technical features and effects (5): Where the shell 100 is provided with the at least one ringlike protrusion 130 and the terminal 300 is provided with the first portion 301 and the at least one third portion 303 having an impedance lower than that of the first portion 301, it is easy to adjust the impedance of the terminal 300. Since the or each ringlike protrusion 130 surrounds, and protrudes toward, the or a corresponding third portion 303 of the terminal 300, the impedance of the or each third portion 303 can be increased such as to be substantially the same or close to the impedance of the first portion 301 of the terminal 300. Moreover, where the shell 100 is fabricated by a machining process, the at least one ringlike protrusion 130 can be fabricated with high precision in terms of dimensions, positions, etc. This allows the at least one third portion 303 to be adjusted in impedance adjustment with high precision.

Technical features and effects (6):Where the shell 100 is provided with the at least one ringlike groove 120 and the body 200 is provided with the at least one ringlike protrusion 230, and/or where the shell 100 is provided with the at least one ringlike protrusion 130 and the body 200 is provided with the at least one ringlike groove 240, the body 200 is restricted in position in the Y-Y' direction relative to the shell body 110 of the shell 100. This is because the or each ringlike protrusion 230 of the body 200 fits in the or a corresponding ringlike groove 120 of the shell body 110 and/or the or each ringlike protrusion 130 of the shell body 110 fits in the or a corresponding ringlike groove 240 of the body 200.

Technical features and effects (7): Where the first outermost end 201 of the body 200 is located on the Y'-direction side relative to the distal end 111 of the shell body 110, when a mating connector is inserted into the connector C1 from the Y-direction side, the connector C1 provides a larger allowable range for the connection of the mating connector in an inclined orientation, or in an offset position in the X-X' and/or Z-Z' direction, relative to the connector C1.

### Second Embodiment

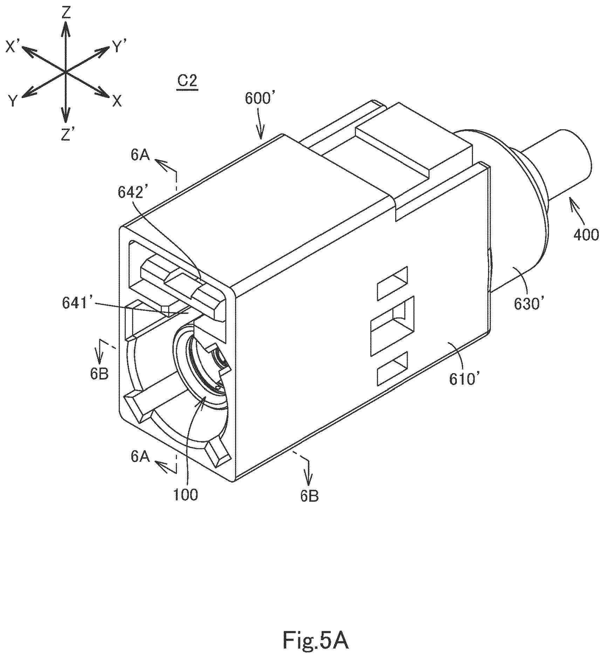

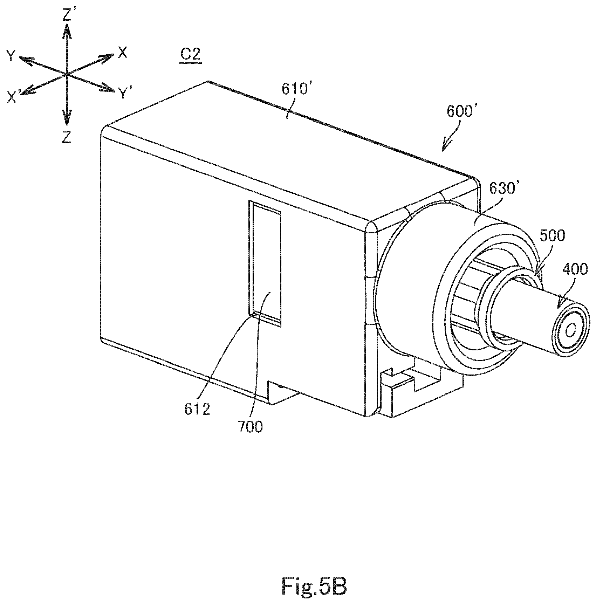

A connector C2 according to a plurality of embodiments of the invention, including the second embodiment and its variants, will now be described with reference to Figs. 5A to 7B. The connector C2 has configuration similar to those of the connector C1, except that the connector C2 is a mating connector connectable to the connector C1. The connector C2 will be described focusing on the differences from the connector C1 and omitting overlapping descriptions. Figs. 5A to 7B also show the Y-Y' direction (first direction) similarly to Figs. 1A to 3B. Figs. 5A to 5B and 6B to 7B also show the X-X' direction (second direction) similarly to Figs. 1A, 1B, and 2B to 3B. Figs. 5A to 6A and 7A to 7B also show the Z-Z' direction (third direction) similarly to Figs. 1A to 2A and 3A to 3B.

A terminal 300 of the connector C2 has the same configuration as the terminal 300 of the connector C1, except that a distal portion 310 thereof is connectable to the distal portion 310 of the terminal 300 of the connector C1. For example, one of the distal portion 310 of the terminal 300 of the connector C1 and the distal portion 310 of the terminal 300 of the connector C2 may have a female shape (e.g., shaped like a pair of arms, have a generally tubular shape or the like shape), and the other distal portion 310 may have a male shape (e.g., shaped like a rod, a plate, or the like).

Where the distal portion 310 of the terminal 300 of the connector C1 protrudes in the Y direction from the housing hole 250 of the body 200 of the connector C1, the distal portion 310 of the terminal 300 of the connector C2 may be disposed in an housing hole 250 of a body 200 of the connector C2 and exposed in the Y direction from the housing hole 250 (see Figs. 6A and 6B).

Where the distal portion 310 of the terminal 300 of the connector C1 is disposed in the housing hole 250 of the body 200 of the connector C1 and exposed in the Y direction from the housing hole 250, the distal portion 310 of the terminal 300 of the connector C2 may protrude in the Y direction from the housing hole 250 of the body 200 of the connector C2 (not illustrated).

Where the distal portion 310 of the terminal 300 of the connector C1 is disposed in the housing hole 250 of the body 200 of the connector C1 and exposed in the Y direction from the housing hole 250, the distal portion 310 of the terminal 300 of the connector C2 may be disposed in the housing hole 250 of the body 200 of the connector C2 and exposed in the Y direction from the housing hole 250 (not illustrated). In this case, there is a ringlike gap between the distal portion 310 of the terminal 300 of the connector C2 and a distal portion 211 of the body 200 of the connector C2. Where the distal portion 310 of the terminal 300 of the connector C2 is connected to the distal portion 310 of the terminal 300 of the connector C1, the distal portion 211 of the body 200 of the connector C1 may be received in the ringlike gap in the housing hole 250 around the distal portion 310 of the terminal 300 of the connector C2, but reversed arrangements may be adopted.

The terminal 300 of the connector C2 may or may not include a first portion 301 and at least one second portion 302 and/or at least one third portion 303.

A distal portion of a shell body 110 of the connector C2 may removably receive the distal portion of the shell body 110 of the connector C1. The distal portion of the shell body 110 of the connector C2 has an inner shape in a cross section along the X-X' and Z-Z' directions that is substantially the same as an outer shape in a cross section along the X-X' and Z-Z' directions of the distal portion of the shell body 110 of the connector C1. The distal portion of the shell body 110 of the connector C2 has inner dimensions in a cross section along the X-X' and Z-Z' directions that are larger than outer dimensions in a cross section along the X-X' and Z-Z' directions of the distal portion of the shell body 110 of the connector C1. The shell body 110 of the shell 100 of the connector C2 may or may not include at least one ringlike groove 120 and/or at least one ringlike protrusion 130.

Regardless of whether the body 200 of the connector C2 includes a tube 220, there is a generally ringlike gap between the distal portion 211 of a main body 210 of the body 200 and the shell body 110. The tube 220 of the body 200 of the connector C2, if provided, surrounds a basal portion on the Y'-direction side of the distal portion 211 of the main body 210 with a generally ringlike gap therebetween. The body 200 of the connector C2 may or may not include at least one ringlike protrusion 230 and/or at least one ringlike groove 240.

The body 200 of the connector C2 may further include at least one abutment 260 in place of the at least one ringlike groove 240. The at least one abutment 260 may be a single abutment or a plurality of abutments in accordance with the number of the at least one ringlike protrusion 130.

For convenience of description, the at least one abutment 260 will be hereinafter described as a single abutment 260, but where a plurality of abutments 260 is provided, each of them is configured similarly to the single abutment 260. Where the tube 220 of the body 200 is provided, the abutment 260 may be constituted by a distal portion on the Y-direction side of the tube 220, or alternatively by a part of the main body 210. Where the tube 220 of the body 200 is not provided, the abutment 260 is constituted by a part of the main body 210. In either case, the abutment 260 abuts the ringlike protrusion 130 from the Y'-direction side.

Where the at least one ringlike protrusion 130 is a plurality of protrusions, the body 200 may include the at least one abutment 260 in addition to the at least one ringlike groove 240. The at least one abutment 260 can be omitted.

The connector C2 may further include a ground terminal 800. The ground terminal 800 includes a first ring 810, a second ring 820, and a plurality of contact springs 830. The first ring 810 and the second ring 820 are C-shaped or circular-ring shaped metal plates configured to be reduced in diameter when elastically deformed, and are arranged in spaced relation to each other in the Y-Y' direction. The contact springs 830 are provided between the first ring 810 and the second ring 820 and arranged in spaced relation to each other along the circumferential direction of the first ring 810. Each of the contact springs 43 is curved in an arc shape such that an intermediate portion thereof protrudes toward an imaginary line extending in the Y-Y' direction through the centers of the first ring 810 and the second ring 820. The ground terminal 800 is housed inside the shell body 110 of the shell 100 and surrounds the distal portion 211 of the main body 210. The first ring 810 and the second ring 820 of the ground terminal 800 is in elastic contact and electrical connection with an inner peripheral face 113 of the shell body 110, and the contact springs 830 of the ground terminal 800 surround the distal portion 310 of the terminal 300 disposed in the housing hole 250 of the body 200. With the distal portion of the shell body 110 of the connector C1 received inside the distal portion of the shell body 110 of the connector C2, the contact springs 830 of the ground terminal 800 are in elastic contact with the distal portion of the shell body 110 of the connector C1.

The ground terminal 800 can be omitted. In this case, with the distal portion of the shell body 110 of the connector C1 received inside the distal portion of the shell body 110 of the connector C2, the distal portion of the shell body 110 of the connector C2 and the distal portion of the shell body 110 of the connector C1 may be in contact with each other.

The connector C2 may include a housing 600'. The housing 600' of the connector C2 is different in configuration from the housing 600 of the connector C1 as described below.

The housing 600' includes a housing body 610' and a tube 630'. The housing body 610' has a generally rectangular tube (a generally tubular shape with a generally rectangular cross section along the Z-Z' and the X-X' directions) extending in the Y-Y' direction. The housing body 610 includes a housing space 611' therein. The housing space 611' extends in the Y-Y' direction through the housing body 610' and is configured to removably receive the connecting portion 620 of the housing 600 of the connector C1. The tube 630' is a generally tubular member extending in the Y' direction from the housing body 610'. The inside of the tube 630' communicates with the housing space 611' of the housing body 610'.

The shell 100 is securely housed in the housing space 611' of the housing body 610'. Where the conductive ring 500 is provided, the conductive ring 500 is disposed in the housing space 611' and inside the tube 630', and the cable 400 is led out of the tube 630' in the Y' direction. Where the conductive ring 500 is not provided, the cable 400 is led out of the tube 630' in the Y' direction.

Where the connector C2 is provided with a retainer 700, the housing body 610' of the connector C2 may further include an engagement hole 612, which is provided in a wall face on the X'-direction side of the housing body 610'. Similarly to the connector C1, the connector C2 is configured such that the first and second engagement arms 710 of the retainer 700 are fixed to the engagement hole 612 of the housing 600' and that the shell body 110 is fixed to the housing 600'.

The housing 600' may further include a locking portion 640'. The locking portion 640' is a box protruding from a wall on the Z-direction side of the housing body 610' to the Z-direction side and extending in the Y-Y' direction. The locking portion 640' is provided with a guide hole 641' extending in the Y-Y' direction and opening in the Y direction. The guide hole 641' extends in the Y-Y' direction and communicates with the housing space 611'. The guide hole 641' is configured to removably receive the locking portion 630 of the housing 600 of the connector C1. A lock hole 642' is provided in a wall of the locking portion 640' that is located on the Z-direction side relative to the guide hole 641'. The lock hole 642' extends in the Z direction from the guide hole 641' and communicates with the guide hole 641'. By inserting the locking portion 630 of the connector C1 into the guide hole 641' so that the protrusion 631 gets caught on an edge of the lock hole 642', the protrusion 631 is locked into the lock hole 642'. Where the locking portion 630 of the connector C1 is not provided, the locking portion 640' is also omitted.

Even where the engagement hole 612 of the housing 600' and the retainer 700 are provided, an engagement groove 170 of the shell 100 can be omitted. In this case, the retainer 700 is only required to elastically retain the shell body 110. It is also possible to omit the engagement groove 170 of the shell 100, the engagement hole 612 of the housing 600', and the retainer 700. It is also possible to omit the housing 600' itself along with the omission of the engagement groove 170 of the shell 100 and the retainer 700.

The connector C2 as described above may be manufactured in a similar manner to the connector C1, except for the following steps. Where the body 200 of the connector C2 is provided with the abutment 260, when the molds are closed together, when a second insert 21 is inserted into the shell body 110 and brought into abutment with a first insert 11, the second insert 21 is brought into abutment with the top face of the ringlike protrusion 130 of the shell 100. As a result, the second wall face of the ringlike protrusion 130 of the shell 100 is disposed such as to face an injection space. When a molten resin is charged, the molten resin also adheres to the second wall face of the ringlike protrusion 130. When the molten resin is solidified, the solidified resin becomes the body 200, and a portion of the solidified molten resin that has adhered to the second wall face of the ringlike protrusion 130 becomes the abutment 260 of the body 200.

Where the housing 600' is provided, the housing 600' is prepared after the terminal 300 and the cable 400 are assembled into the shell 100. The shell 100 is then inserted through the tube 630' of the housing 600' into the housing space 611' of the housing body 610'. The shell 100 is thus inserted and retained in the housing space 611'. Thereafter, the retainer 700 is fixed to the housing 600' and the shell body 110 is fixed to the housing 600' in a manner similar to the step of attaching the retainer 700 to the housing 600 in the method for manufacturing the connector C1.

Where the retainer 700 is not provided, the step of attaching the retainer 700 to the housing 600' can simply be omitted. Where neither the housing 600' nor the retainer 700 are provided, the step of assembling the shell 100 and other components into the housing 600' and the step of attaching the retainer 700 to the housing 600' can simply be omitted.

The connector C2 and the method for manufacturing the connector C2 provides similar technical features and effects as the technical features and effects (1) to (7) of the connector C1 and the method for manufacturing the connector C1. The connector C2 further provide the following technical features and effects.

Where the connector C2 is provided with the at least one ringlike protrusion 130 of the shell 100 and the at least one abutment 260 of the body 200, the at least one abutment 260 abuts the at least one ringlike protrusion 130 from the Y'-direction side, so that the body 200 is restricted in position in the Y-Y' direction relative to the shell body 110 of the shell 100.

The connectors and the manufacturing methods of the invention are not limited to the embodiments described above but may be modified as appropriate within the scope of the claims. Some examples of modification will now be described.

The connectors according to the invention are not limited to coaxial connectors. The terminal 300 of one of the above aspects may be disposed inside the shell body 110 of the shell 100 of one of the above aspects, but the terminal 300 and the shell body 110 may not form a coaxial structure.

The cable 400 is not limited to a coaxial cable. The cable can be modified in any manner as long as it is partly received in the shell body 110 from the Y'-direction side and connected to the rear portion 330 of the terminal 300 of one of the above aspects inside the shell body 110.

The terminal 300 of one of the above aspects may be provided as a plurality of terminals 300. In this case, the housing hole 250 of the body 200 of one of the above aspects may be provided as a plurality of housing holes 250 in accordance with the number of the terminals 300, and the terminals 300 are only required to be securely housed in the corresponding housing hole 250 in one of the above manners. Where the plurality of terminals 300 is provided, the cable 400 may also be provided as a plurality of cables 400. Alternatively, a single cable 400 may be provided including the outer insulator 410, the outer conductor 420, a plurality of the inner insulators 430, and a plurality of the inner conductors 440. The plurality of inner insulators 430 is disposed inside the outer conductor 420. Distal portions on the Y-direction side of the plurality of inner insulators 430 protrude from the outer conductor 420 in the Y direction. Where the hole 150 of the shell 100 is provided, the plurality of inner insulators 430 of the plurality of cables 400 or the plurality of inner insulators 430 of the single cable 400 is received in the hole 150, and the distal portions of the plurality of inner conductors 440 of the plurality of cables 400 or the single cable 400 are connected to the respective rear portions 330 of the plurality of terminals 300 in respective housing holes 250 of the body 200. Where the hole 150 of the shell 100 is not provided, the plurality of inner insulators 430 of the plurality of cables 400 or the plurality of inner insulators 430 of the single cable 400 is received in the shell body 110, and the distal portions of the plurality of inner conductors 440 of the plurality of cables 400 or the single cable 400 are connected to the respective rear portions 330 of the plurality of terminals 300 in respective housing holes 250 of the body 200 or inside the shell body 110. The or each cable 400 may not include neither the outer insulator 410 nor the outer conductor 420.

The step of inserting the cable 400 in the methods for manufacturing the connectors of the invention may be modified in any manner as long as the cable or cables of one of the above aspects are partly inserted into the shell body 110 from the Y'-direction side. Where the hole 150 of the shell 100 is provided, the step of inserting the cable 400 may be modified in any manner as long as the cable or cables of one of the above aspects are partly inserted from the hole 150 into the housing hole or holes 250 of the body 200.

### Reference Signs List

C1, C2: connector
   100: shell
      110: shell body; 111: distal portion; 112: rear portion; 113: inner peripheral face
      120: ringlike groove
      130: ringlike protrusion
      140: bottom; 141: first face
      150: hole
      160: cable holder
      170: engagement groove
   200: body
      201: first outermost end; 202: second outermost end
      210: main body; 211: distal portion; 212: intermediate portion; 213: rear portion
      220: tube
      230: ringlike protrusion
      240: ringlike groove
      250: housing hole
      260: abutment
   300: terminal
      301: first portion; 302: second portion; 303: third portion
      310: distal portion; 320: intermediate portion; 330: rear portion
   400: cable
      410: outer insulator; 420: outer conductor; 430: inner insulator; 440: inner conductor
   500: conductive ring
   600, 600': housing
   700: retainer
   800: ground terminal
10: first mold; 11: first insert
20: second mold; 21: second insert
G: gate
H: shell retainer

## Claims

1. A connector (C1, C2) comprising:
a shell (100) having electrical conductivity and including a shell body (110), the shell body (110) having a generally tubular shape and extending in a first direction (Y-Y'), the first direction (Y-Y') being an axial direction of the shell body (110);
a body (200) constituted by a molded insulating resin insert-molded inside the shell body (110), entirely housed inside the shell body (110), and exposed from inside the shell body (110) to one side (Y) in the first direction (Y-Y'), the body (200) including a housing hole (250) extending through the body (200) in the first direction (Y-Y');
a terminal (300) being entirely disposed inside the shell body (110) and including:
a distal portion (310) protruding from the housing hole (250) of the body (200) to the one side (Y) in the first direction (Y-Y') and being disposed inside the shell body (110), or alternatively being disposed in the housing hole (250) of the body (200) and exposed from the housing hole (250) to the one side (Y) in the first direction (Y-Y'),
an intermediate portion (320) at least partly retained in the housing hole (250) of the body (200), and
a rear portion (330) being disposed in the housing hole (250) of the body (200), or alternatively protruding from the housing hole (250) of the body (200) to the other side (Y') in the first direction (Y-Y'); and
a cable (400) partly received inside the shell body (110) from the other side (Y') in the first direction (Y-Y') and connected to the rear portion (330) of the terminal (300) inside the shell body (110),
**characterized in that**
the terminal (300) includes:
a first portion (301) being a portion in the first direction (Y-Y') of the terminal (300), and
a second portion (302) being another portion in the first direction (Y-Y') of the terminal (300) that does not include the first portion (301), the second portion (302) being higher in impedance than the first portion (301),
the shell (100) further includes a ringlike groove (120) in an inner peripheral face (113) of the shell body (110),
the ringlike groove (120) surrounds, and is recessed away from, the second portion (302) of the terminal (300) such that a central axis of the ringlike groove (120) substantially coincides with a central axis of the shell body (110).

2. The connector (C1, C2) according to claim 1, wherein
the body (200) further includes a ringlike protrusion (230) being provided on an outer peripheral face of the body (200) and protruding toward the ringlike groove (120) of the shell (100), and
the ringlike protrusion (230) of the body (200) fits in the ringlike groove (120) of the shell (100).

3. The connector (C1, C2) according to claim 1, wherein
the terminal (300) further includes a third portion (303) being another portion in the first direction (Y-Y') of the terminal (300) that does not include the first portion (301), the third portion (303) being lower in impedance than the first portion (301),
the shell (100) further includes a ringlike protrusion (130) on an inner peripheral face (113) of the shell body (110), and
the ringlike protrusion (130) surrounds, and protrudes toward, the third portion (303) of the terminal (300) such that a central axis of the ringlike protrusion (130) substantially coincides with a central axis of the shell body (110).

4. The connector (C1, C2) according to claim 3, wherein
the body (200) further includes a ringlike groove (240) provided in an outer peripheral face of the body (200) and recessed relative to the ringlike protrusion (130) of the shell (100), and
the ringlike protrusion (130) of the shell (100) fits in the ringlike groove (240) of the body (200).

5. The connector (C2) according to claim 3, wherein the body (200) further includes an abutment (260) to abut the ringlike protrusion (130) from the other side (Y') in the first direction (Y-Y').

6. The connector (C1, C2) according to claim 1, wherein
the shell (100) includes:
a bottom (140) on the other side (Y') in the first direction (Y-Y') of the shell body (110), and
a hole (150) extending through the bottom (140) in the first direction (Y-Y') and having dimensions in a cross section along second (X-X') and third (Z-Z') directions that are smaller than inner dimensions in a cross section along the second (X-X') and third (Z-Z') directions of the shell body (110),
the second direction (X-X') is substantially orthogonal to the first direction (Y-Y'), and the third direction (Z-Z') is substantially orthogonal to the first (Y-Y') and second (X-X') directions,
the body (200) abuts the bottom (140) from the one side (Y) in the first direction (Y-Y'), and the housing hole (250) of the body (200) communicates with the hole (150) of the shell (100), and
the cable (400) is partly received in the housing hole (250) of the body (200) from the hole (150) of the shell (100) and connected to the rear portion (330) of the terminal (300) in the housing hole (250) of the body (200).

7. The connector (C1, C2) according to claim 6, wherein the cable (400) includes:
an outer insulator (410) being a generally tubular member constituted by an insulating material and located on the other side (Y') in the first direction (Y-Y') relative to the shell (100),
an outer conductor (420) being a generally tubular member constituted by an electrically conductive material, being disposed inside the outer insulator (410), and including a distal portion, the distal portion of the outer conductor (420) protruding from the outer insulator (410) to the one side (Y) in the first direction (Y-Y') and being electrically connected to the shell (100),
an inner insulator (430) being a generally tubular member constituted by an insulating material, being disposed inside the outer conductor (420), and including a distal portion, the distal portion of the inner insulator (430) protruding from the outer conductor (420) to the one side (Y) in the first direction (Y-Y') and fitting in the hole (150) of the shell (100), and
an inner conductor (440) being disposed inside the inner insulator (430) and including a distal portion, the distal portion of the inner conductor (440) protruding from the inner insulator (430) to the one side (Y) in the first direction (Y-Y'), being received in the housing hole (250) of the body (200), and being connected to the rear portion (330) of the terminal (300) in the housing hole (250) of the body (200).

8. The connector (C1, C2) according to claim 7, wherein
the shell (100) further includes a cable holder (160) extending from the bottom (140) to the other side (Y') in the first direction (Y-Y'),
the hole (150) of the shell (100) extends in the first direction (Y-Y') through the bottom (140) and the cable holder (160), and
the distal portion of the outer conductor (420) of the cable (400) fits over the cable holder (160).

9. A method for manufacturing a connector (C1, C2), the method comprising:
closing together a first mold (10) including a first insert (11) and a second mold (20) including a second insert (21) and housing a shell (100) into a cavity of the first (10) and second (20) molds, the shell (100) including a shell body (110), the shell body (110) having a generally tubular shape and extending in a first direction (Y-Y'), blocking the shell body (110) of the shell (100) with the first insert (11) from one side (Y) in the first direction (Y-Y'), and inserting the second insert (21) into the shell body (110) from the other side (Y') in the first direction (Y-Y') to bring the second insert (21) into abutment with the first insert (11) and to block the shell body (110) with the second insert (21) from the other side (Y') in the first direction (Y-Y'), so that the shell body (110), the first insert (11), and the second insert (21) define an injection space and a gate (G) in the first insert (11) is brought into communication with the injection space;
injecting a molten resin through the gate (G) into the injection space in the shell body (110), charging the molten resin into the injection space, and solidifying the charged molten resin to insert-mold the body (200) entirely inside the shell body (110);
opening the first mold (10) and the second mold (20) apart from each other, removing the first insert (11) and the second insert (21) from the shell (100) and the body (200), and thereby forming a housing hole (250) in a portion of the body (200) from which the second insert (21) has been removed;
preparing a terminal (300) and a cable (400) connected to the terminal (300); and
inserting the terminal (300) into the shell body (110) from the other side (Y') in the first direction (Y-Y') to hold the terminal (300) in the housing hole (250) of the body (200) such that the terminal (300) is entirely disposed inside the shell body (110), and to insert the cable (400) partly into the shell body (110) from the other side (Y') in the first direction (Y-Y'),
**characterized in that**
the shell (100) includes a ringlike groove (120) in an inner peripheral face (113) of the shell body (110),
the ringlike groove (120) is disposed such that a central axis of the ringlike groove (120) substantially coincides with a central axis of the shell body (110), and is recessed away from the central axis of the shell body (110), and
the closing of the first (10) and second (20) molds further includes allowing the ringlike groove (120) to form part of the injection space,
the insert-molding of the body (200) further includes allowing the molten resin injected into the injection space to be charged into the ringlike groove (120), and
the inserting of the terminal (300) includes disposing a second portion (302) of the terminal (300) inside the ringlike groove (120), the second portion (302) being higher in impedance than the first portion (301).

10. The method according to claim 9,
wherein the closing of the first (10) and second (20) molds further includes inserting the first insert (11) into the shell body (110) from the one side (Y) in the first direction (Y-Y') to block the shell body (110) with the first insert (11) from the one side (Y) in the first direction (Y-Y'), and bringing an injection port of the gate (G) of the first insert (11) into communication with the injection space inside the shell body (110).

11. The method according to claim 9 or 10, wherein
the shell (100) includes a ringlike protrusion (130) on an inner peripheral face (113) of the shell body (110),
the ringlike protrusion (130) is disposed such that a central axis of the ringlike protrusion (130) substantially coincides with a central axis of the shell body (110), and protrudes toward the central axis of the shell body (110),
the closing of the first (10) and second (20) molds further includes disposing the ringlike protrusion (130) in the injection space,
the insert-molding of the body (200) further includes allowing the molten resin injected into the injection space to adhere to the ringlike protrusion (130), and
the inserting of the terminal (300) includes disposing a third portion (303) of the terminal (300) inside the ringlike protrusion (130), the third portion (303) being higher in impedance than the first portion (301).

12. The method according to claim 9 or 10, wherein
the shell (100) includes a ringlike protrusion (130) on an inner peripheral face (113) of the shell body (110),
the ringlike protrusion (130) is disposed such that a central axis of the ringlike protrusion (130) substantially coincides with a central axis of the shell body (110), and protrudes toward the central axis of the shell body (110),
the closing of the first (10) and second (20) molds further includes bringing the second insert (21) into abutment with a top face of the ringlike protrusion (130) and exposing a wall face on the other side (Y') in the first direction (Y-Y') of the ringlike protrusion (130)into the injection space, and
the insert-molding of the body (200) further includes allowing the molten resin injected into the injection space to adhere to the wall face of the ringlike protrusion (130), and
the inserting of the terminal (300) includes disposing a third portion (303) of the terminal (300) inside the ringlike protrusion (130), the third portion (303) being higher in impedance than the first portion (301).

13. The method according to claim 9 or 10, wherein
the shell (100) includes:
a bottom (140) on the other side (Y') in the first direction (Y-Y') of the shell body (110), and
a hole (150) extending through the bottom (140) in the first direction (Y-Y') and having dimensions in a cross section along second (X-X') and third (Z-Z') directions that are smaller than inner dimensions in a cross section along the second (X-X') and third (Z-Z') directions of the shell body (110),
the second direction (X-X') is substantially orthogonal to the first direction (Y-Y'), and the third direction (Z-Z') is substantially orthogonal to the first (Y-Y') and second (X-X') directions,
the closing of the first (10) and second (20) molds further includes inserting the second insert (21) into the hole (150) of the shell (100) from the other side (Y') in the first direction (Y-Y') to bring the second insert (21) into abutment with the first insert (11) and to block the hole (150) of the shell (100) with the second insert (21) from the other side (Y') in the first direction (Y-Y'), so that the second insert (21) blocks the shell body (110) from the other side (Y') in the first direction (Y-Y') and so that the shell body (110), the bottom (140), the first insert (11), and the second insert (21) define the injection space,
the insert-molding of the body (200) further includes allowing the molten resin injected into the injection space to adhere to the bottom (140) of the shell (100),
the opening of the first (10) and second (20) molds further includes forming the housing hole (250) in a portion of the body (200) from which the second insert (21) has been removed such that the housing hole (250) communicates with the hole (150) of the shell (100), and
the inserting of the terminal (300) and the cable (400) further includes inserting the terminal (300) from the hole (150) of the shell (100) into the housing hole (250) of the body (200) to hold the terminal (300) in the housing hole (250) of the body (200), and to insert the cable (400) partly into the housing hole (250) of the body (200) from the hole (150) of the shell (100).

14. The method according to claim 9, wherein the closing of the first (10) and second (20) molds further includes housing a shell retainer (H) in the cavity, the shell retainer (H) having a generally tubular shape, extending in the first direction (Y-Y'), and fitting over the shell (100).

## Patentansprüche

1. Verbinder (C1, C2), umfassend:
Ein Gehäuse (100), das elektrische Leitfähigkeit aufweist und einen Gehäusekörper (110) umfasst, wobei der Gehäusekörper (110) eine generell röhrenförmige Gestalt aufweist und sich in einer ersten Richtung (Y-Y') erstreckt, wobei die erste Richtung (Y-Y') eine axiale Richtung des Gehäusekörpers (110) ist;
einen Körper (200), der aus einem geformten Isolierharz besteht, welches im Inneren des Gehäusekörpers (110) durch Umspritzen eingeformt ist, vollständig im Inneren des Gehäusekörpers (110) untergebracht ist und vom Inneren des Gehäusekörpers (110) aus zu einer Seite (Y) in der ersten Richtung (Y-Y') hin exponiert ist, wobei der Körper (200) eine Aufnahmeöffnung (250) aufweist, die sich in der ersten Richtung (Y-Y') durch den Körper (200) erstreckt;
ein Anschlusselement (300), das vollständig innerhalb des Gehäusekörpers (110) angeordnet ist und Folgendes umfasst:
Einen distalen Abschnitt (310), der aus der Aufnahmeöffnung (250) des Körpers (200) zu der einen Seite (Y) in der ersten Richtung (Y-Y') herausragt und innerhalb des Gehäusekörpers (110) angeordnet ist, oder alternativ in der Aufnahmeöffnung (250) des Körpers (200) angeordnet ist und von der Aufnahmeöffnung (250) aus zu der einen Seite (Y) in der ersten Richtung (Y-Y') exponiert ist,
einen Zwischenabschnitt (320), der zumindest teilweise in der Aufnahmeöffnung (250) des Körpers (200) zurückgehalten wird, und
einen hinteren Abschnitt (330), der in der Aufnahmeöffnung (250) des Körpers (200) angeordnet ist oder alternativ aus der Aufnahmeöffnung (250) des Körpers (200) zur anderen Seite (Y') in der ersten Richtung (Y-Y') herausragt; und ein Kabel (400), das von der anderen Seite (Y') in der ersten Richtung (Y-Y') teilweise im Gehäusekörper (110) aufgenommen und im Inneren des Gehäusekörpers (110) mit dem hinteren Abschnitt (330) des Anschlusselements (300) verbunden ist,
**dadurch gekennzeichnet, dass**
das Anschlusselement (300) umfasst:
Einen ersten Abschnitt (301), der ein Abschnitt in der ersten Richtung (Y-Y') Anschlusselements (300) ist, und
einen zweiten Abschnitt (302), der ein weiterer Abschnitt in der ersten Richtung (Y-Y') des Anschlusselements (300) ist, der den ersten Abschnitt (301) nicht enthält, wobei der zweite Abschnitt (302) eine höhere Impedanz als der erste Abschnitt (301) aufweist,
das Gehäuse (100), welches ferner eine ringförmige Nut (120) in einer inneren peripheren Fläche (113) des Gehäusekörpers (110) umfasst,
die ringförmige Nut (120), welche den zweiten Abschnitt (302) des Endstücks (300) umschließt und ist von diesem zurückgesetzt, sodass eine Mittelachse der ringförmigen Nut (120) im Wesentlichen mit einer Mittelachse des Gehäusekörpers (110) übereinstimmt.

2. Verbinder (C1, C2) nach Anspruch 1, wobei der Körper (200) ferner einen ringförmigen Vorsprung (230) aufweist, der an einer äußeren peripheren Fläche des Körpers (200) vorgesehen ist und in Richtung der ringförmigen Nut (120) des Gehäuses (100) vorsteht, und
wobei der ringförmige Vorsprung (230) des Körpers (200) in die ringförmige Nut (120) des Gehäuses (100) passt.

3. Verbinder (C1, C2) nach Anspruch 1, wobei
das Anschlusselement (300) ferner einen dritten Abschnitt (303) umfasst, der ein weiterer Abschnitt in der ersten Richtung (Y-Y') des Anschlusselements (300) ist, der den ersten Abschnitt (301) nicht umfasst, wobei der dritte Abschnitt (303) eine niedrigere Impedanz als der erste Abschnitt (301) aufweist,
das Gehäuse (100) ferner einen ringförmigen Vorsprung (130) an einer inneren peripheren Fläche (113) des Gehäusekörpers (110) aufweist, und
der ringförmige Vorsprung (130) den dritten Abschnitt (303) des Anschlusselements (300) umgibt und zu diesem hin vorsteht, sodass eine Mittelachse des ringförmigen Vorsprungs (130) im Wesentlichen mit einer Mittelachse des Gehäusekörpers (110) zusammenfällt.

4. Verbinder (C1, C2) nach Anspruch 3, wobei
der Körper (200) ferner eine ringförmige Nut (240) aufweist, die in einer äußeren peripheren Fläche des Körpers (200) angeordnet und relativ zum ringförmigen Vorsprung (130) des Gehäuses (100) vertieft ist, und
der ringförmige Vorsprung (130) des Gehäuses (100) in die ringförmige Nut (240) des Körpers (200) passt.

5. Verbinder (C2) nach Anspruch 3, wobei der Körper (200) ferner einen Anschlag (260) aufweist, um in der ersten Richtung (Y-Y') von der anderen Seite (Y') her am ringförmigen Vorsprung (130) anzuliegen.

6. Verbinder (C1, C2) nach Anspruch 1, wobei
das Gehäuse (100) umfasst:
Einen Boden (140) auf der anderen Seite (Y') in der ersten Richtung (Y-Y') des Gehäusekörpers (110), und
eine Öffnung (150), die sich in der ersten Richtung (Y-Y') durch den Boden (140) erstreckt und in einem Querschnitt entlang der zweiten (X-X'-) und dritten (Z-Z'-) Richtung Dimensionen aufweist, die kleiner als die inneren Dimensionen des Gehäusekörpers (110) in einem Querschnitt entlang der zweiten (X-X'-) und dritten (Z-Z'-) Richtung sind,
die zweite Richtung (X-X'), die im Wesentlichen orthogonal zur ersten Richtung (Y-Y') ist und die dritte Richtung (Z-Z'), die im Wesentlichen orthogonal zu den ersten (Y-Y') und zweiten (X-X') Richtungen ist,
den Körper (200), der von der einen Seite (Y) in der ersten Richtung (Y-Y') an den Boden (140) angrenzt, und die Gehäuseöffnung (250) des Körpers (200), die mit der Öffnung (150) des Gehäuses (100) in Verbindung steht, und
das Kabel (400), das teilweise durch die Öffnung (150) des Gehäuses (100) in die Gehäuseöffnung (250) des Gehäuses (200) aufgenommen und mit dem hinteren Abschnitt (330) des Anschlusselements (300) in der Gehäuseöffnung (250) des Gehäuses (200) verbunden wird.

7. Verbinder (C1, C2) nach Anspruch 6, wobei das Kabel (400) umfasst:
Einen äußeren Isolator (410), der im Allgemeinen ein röhrenförmiges Element aus Isoliermaterial ist und sich auf der anderen Seite (Y') in der ersten Richtung (Y-Y') relativ zum Gehäuse (100) befindet.
einen äußeren Leiter (420), der ein im Allgemeinen röhrenförmiges Element aus einem elektrisch leitfähigen Material ist, das sich innerhalb des äußeren Isolators (410) befindet und einen distalen Abschnitt aufweist, wobei der distale Abschnitt des äußeren Leiters (420) aus dem äußeren Isolator (410) auf einer Seite (Y) in der ersten Richtung (Y-Y') herausragt und elektrisch mit dem Gehäuse (100) verbunden ist,
einen inneren Isolator (430), der im Allgemeinen ein röhrenförmiges Element aus Isoliermaterial ist, das sich innerhalb des äußeren Leiters (420) befindet und einen distalen Abschnitt aufweist, wobei der distale Abschnitt des inneren Isolators (430) aus dem äußeren Leiter (420) auf einer Seite (Y) in erster Richtung (Y-Y') herausragt und in die Öffnung (150) des Gehäuses (100) passt, und
einen inneren Leiter (440), der im Inneren des inneren Isolators (430) angeordnet ist und einen distalen Abschnitt aufweist, wobei der distale Abschnitt des inneren Leiters (440) aus dem inneren Isolator (430) zur einen Seite (Y) in der ersten Richtung (Y-Y') herausragt, in der Gehäuseöffnung (250) des Körpers (200) aufgenommen ist und mit dem hinteren Abschnitt (330) des Anschlusselements (300) in der Gehäuseöffnung (250) des Körpers (200) verbunden ist.

8. Verbinder (C1, C2) nach Anspruch 7, wobei
das Gehäuse (100) ferner einen Kabelhalter (160) umfasst, der sich vom Boden (140) zur anderen Seite (Y') in der ersten Richtung (Y-Y') erstreckt,
sich die Öffnung (150) des Gehäuses (100) in die erste Richtung (Y-Y') durch den Boden (140) und die Kabelhalterung (160) erstreckt, und
der distale Abschnitt des äußeren Leiters (420) des Kabels (400) über die Kabelhalterung (160) passt.

9. Verfahren zur Herstellung eines Verbinders (C1, C2), wobei das Verfahren umfasst:
Schließen einer ersten Form (10), die einen ersten Einsatz (11) umfasst, und einer zweiten Form (20), die einen zweiten Einsatz (21) umfasst, sowie Aufnehmen eines Gehäuses (100) in einen Hohlraum der ersten (10) und zweiten (20) Formen, wobei das Gehäuse (100) einen Gehäusekörper (110) umfasst, der eine im Wesentlichen röhrenförmige Gestalt aufweist und sich in einer ersten Richtung (Y-Y') erstreckt, Blockieren des Gehäusekörpers (110) des Gehäuses (100) mittels des ersten Einsatzes (11) von einer Seite (Y) in der ersten Richtung (Y-Y') und Einführen des zweiten Einsatzes (21) in den Gehäusekörper (110) von der anderen Seite (Y') in der ersten Richtung (Y-Y'), um den zweiten Einsatz (21) in Anlage an den ersten Einsatz (11) zu bringen und den Gehäusekörper (110) mittels des zweiten Einsatzes (21) von der anderen Seite (Y') in der ersten Richtung (Y-Y') zu blockieren, sodass der Gehäusekörper (110), der erste Einsatz (11) und der zweite Einsatz (21) einen Einspritzraum definieren und ein Anguss (G) im ersten Einsatz (11) mit dem Einspritzraum in Verbindung gebracht wird;
Einspritzen eines geschmolzenen Harzes durch den Anguss (G) in den Einspritzraum im Gehäusekörper (110), Einbringen des geschmolzenen Harzes in den Einspritzraum und Verfestigen des eingebrachten geschmolzenen Harzes, um den Körper (200) mittels Umspritzen vollständig im Inneren des Gehäusekörpers (110) einzubetten.
Öffnen der ersten Form (10) und der zweiten Form (20) voneinander, Entfernen des ersten Einsatzes (11) und des zweiten Einsatzes (21) aus dem Gehäuse (100) und dem Körper (200) und dadurch Formen einer Gehäuseöffnung (250) in einem Abschnitt des Körpers (200), aus dem der zweite Einsatz (21) entfernt wurde;
Vorbereiten eines Anschlusselements (300) und eines mit dem Anschlusselement (300) verbundenen Kabels (400); und
Einführen des Anschlusselements (300) in das Gehäuse (110) von der anderen Seite (Y') in der ersten Richtung (Y-Y'), um das Anschlusselement (300) in der Aufnahmeöffnung (250) des Gehäuses (200) so zu fixieren, dass das Anschlusselement (300) vollständig im Gehäuse (110) liegt, und teilweises Einführen des Kabels (400) in das Gehäuse (110) von der anderen Seite (Y') in der ersten Richtung (Y-Y'), **dadurch gekennzeichnet, dass**
das Gehäuse (100) eine ringförmige Nut (120) in einer inneren peripheren Fläche (113) des Gehäusekörpers (110) umfasst,
die ringförmige Nut (120) so angeordnet ist, dass eine Mittelachse der ringförmigen Nut (120) im Wesentlichen mit einer Mittelachse des Gehäusekörpers (110) übereinstimmt und von der Mittelachse des Gehäusekörpers (110) zurückgesetzt ist, und
das Schließen der ersten (10) und zweiten (20) Formen ferner umfasst, dass die ringförmige Nut (120) Teil des Einspritzraums bildet,
das Umspritzen des Körpers (200) ferner das Einbringen des in den Einspritzraum eingespritzten geschmolzenen Harzes in die ringförmige Nut (120) umfasst, und
das Einsetzen des Anschlusselements (300) das Anordnen eines zweiten Abschnitts (302) des Anschlusselements (300) innerhalb der ringförmigen Nut (120) umfasst, wobei der zweite Abschnitt (302) eine höhere Impedanz als der erste Abschnitt (301) aufweist.

10. Verfahren nach Anspruch 9,
wobei das Schließen der ersten (10) und zweiten (20) Formen ferner das Einsetzen des ersten Einsatzes (11) von der einen Seite (Y) in der ersten Richtung (Y-Y') in den Gehäusekörper (110), um den Gehäusekörper (110) mittels des ersten Einsatzes (11) von der einen Seite (Y) in der ersten Richtung (Y-Y') zu blockieren, sowie das Herstellen einer Verbindung zwischen einer Einspritzöffnung des Angusses (G) des ersten Einsatzes (11) und dem Einspritzraum im Inneren des Gehäusekörpers (110) umfasst.

11. Verfahren nach Anspruch 9 oder 10, wobei
das Gehäuse (100) einen ringförmigen Vorsprung (130) in einer inneren peripheren Fläche (113) des Gehäusekörpers (110) umfasst,
der ringförmige Vorsprung (130) derart angeordnet ist, dass eine Mittelachse des ringförmigen Vorsprungs (130) im Wesentlichen mit einer Mittelachse des Gehäusekörpers (110) zusammenfällt und in Richtung der Mittelachse des Gehäusekörpers (110) hervorragt,
das Schließen der ersten (10) und zweiten (20) Formen ferner das Anordnen des ringförmigen Vorsprungs (130) im Einspritzraum umfasst,
das Umspritzen des Körpers (200) ferner das Anhaften des in den Einspritzraum eingespritzten geschmolzene Harzes an den ringförmigen Vorsprung (130) umfasst, und
das Einsetzen des Anschlusselements (300) das Anordnen eines dritten Abschnitts (303) des Anschlusselements (300) innerhalb des ringförmigen Vorsprungs (130) umfasst, wobei der dritte Abschnitt (303) eine höhere Impedanz als der erste Abschnitt (301) aufweist.

12. Verfahren nach Anspruch 9 oder 10, wobei
das Gehäuse (100) einen ringförmigen Vorsprung (130) in einer inneren peripheren Fläche (113) des Gehäusekörpers (110) umfasst,
der ringförmige Vorsprung (130) derart angeordnet ist, dass eine Mittelachse des ringförmigen Vorsprungs (130) im Wesentlichen mit einer Mittelachse des Gehäusekörpers (110) zusammenfällt und in Richtung der Mittelachse des Gehäusekörpers (110) hervorragt,
das Schließen der ersten (10) und zweiten (20) Formen ferner das Anlegen des zweiten Einsatzes (21) an eine Oberseite des ringförmigen Vorsprungs (130) und das Freilegen einer Wandfläche auf der anderen Seite (Y') in der ersten Richtung (Y-Y') des ringförmigen Vorsprungs (130) in den Einspritzraum umfasst, und
das Umspritzen des Körpers (200) ferner umfasst, dass das in den Einspritzraum eingespritzte geschmolzene Harz an der Wandfläche des ringförmigen Vorsprungs (130) haftet, und
das Einsetzen des Anschlusselements (300) das Anordnen eines dritten Abschnitts (303) des Anschlusselements (300) innerhalb des ringförmigen Vorsprungs (130) umfasst, wobei der dritte Abschnitt (303) eine höhere Impedanz als der erste Abschnitt (301) aufweist.

13. Verfahren nach Anspruch 9 oder 10, wobei
das Gehäuse (100) umfasst:
Einen Boden (140) auf der anderen Seite (Y') in der ersten Richtung (Y-Y') des Gehäusekörpers (110), und
eine Öffnung (150), das sich in der ersten Richtung (Y-Y') durch den Boden (140) erstreckt und in einem Querschnitt entlang der zweiten (X-X'-) und dritten (Z-Z'-) Richtung Dimensionen aufweist, die kleiner als die inneren Dimensionen des Gehäusekörpers (110) in einem Querschnitt entlang der zweiten (X-X'-) und dritten (Z-Z'-) Richtung sind,
die zweite Richtung (X-X') im Wesentlichen orthogonal zur ersten Richtung (Y-Y') ist und die dritte Richtung (Z-Z') im Wesentlichen orthogonal zu den ersten (Y-Y') und zweiten (X-X') Richtungen ist, wobei das Schließen der ersten (10) und zweiten (20) Formen ferner das Einführen des zweiten Einsatzes (21) in die Öffnung (150) des Gehäuses (100) von der anderen Seite (Y') in der ersten Richtung (Y-Y') umfasst, um den zweiten Einsatz (21) an den ersten Einsatz (11) anzulegen und die Öffnung (150) des Gehäuses (100) mit dem zweiten Einsatz (21) von der anderen Seite (Y') in der ersten Richtung (Y-Y') zu blockieren, sodass der zweite Einsatz (21) den Gehäusekörper (110) von der anderen Seite (Y') in der ersten Richtung (Y-Y') blockiert und sodass der Gehäusekörper (110), der Boden (140), der erste Einsatz (11) und der zweite Einsatz (21) den Einspritzraum definieren,
das Umspritzen des Körpers (200) ferner umfasst, dass das in den Einspritzraum eingespritzte geschmolzene Harz an der Unterseite (140) des Gehäuses (100) haftet,
das Öffnen der ersten (10) und zweiten (20) Formen ferner das Formen der Gehäuseöffnung (250) in einem Teil des Körpers (200) umfasst, aus dem der zweite Einsatz (21) entfernt wurde, sodass die Gehäuseöffnung (250) mit der Öffnung (150) des Gehäuses (100) in Verbindung steht, und
das Einführen des Anschlusselements (300) und des Kabels (400) ferner das Einführen des Anschlusselements (300) von der Öffnung (150) der Schale (100) aus in die Gehäuseöffnung (250) des Grundkörpers (200), um das Anschlusselement (300) in der Gehäuseöffnung (250) des Körpers (200) zu halten, und sowie das teilweise Einführen des Kabels (400) von der Öffnung (150) des Gehäuses (100) aus in die Gehäuseöffnung (250) des Körpers (200) umfasst.

14. Verfahren nach Anspruch 9, wobei das Schließen der ersten (10) und zweiten (20) Form zudem das Unterbringen einer Gehäusehalterung (H) in dem Hohlraum umfasst, wobei die Gehäusehalterung (H) eine im Wesentlichen rohrförmige Gestalt aufweist, sich in der ersten Richtung (Y-Y') erstreckt und über die Schale (100) passt.

## Revendications

1. Connecteur (C1, C2) comprenant :
une douille (100) présentant une conductivité électrique, et comprenant un corps de douille (110), le corps de douille (110) ayant une forme généralement tubulaire, et s'étendant dans une première direction (Y-Y'), la première direction (Y-Y') étant une direction axiale du corps de douille (110) ;
un corps (200) composé d'une résine isolante moulée, moulée par insertion à l'intérieur du corps de douille (110), contenu entièrement à l'intérieur du corps de douille (110), et exposé de l'intérieur du corps de douille (110) à un côté (Y) dans la première direction (Y-Y'), le corps (200) comprenant un orifice de boîtier (250) s'étendant à travers le corps (200) dans la première direction (Y-Y') ;
une borne (300) disposée entièrement à l'intérieur du corps de douille (110), et comprenant :
une partie distale (310) faisant saillie de l'orifice de boîtier (250) du corps (200) vers un côté (Y) dans la première direction (Y-Y'), et étant disposée à l'intérieur du corps de douille (110), ou, en alternative, étant disposée dans l'orifice de boîtier (250) du corps (200) et exposée de l'orifice de boîtier (250) vers l'un côté (Y) dans la première direction (Y-Y'),
une partie intermédiaire (320) maintenue au moins partiellement dans l'orifice de boîtier (250) du corps (200), et
une partie postérieure (330) disposée dans l'orifice de boîtier (250) du corps (200), ou, en alternative, faisant saillie de l'orifice de boîtier (250) du corps (200) vers l'autre côté (Y') dans la première direction (Y-Y'), et
un câble (400) reçu partiellement à l'intérieur du corps de douille (110) depuis l'autre côté (Y') dans la première direction (Y-Y'), et connecté à la partie postérieure (330) de la borne (300) à l'intérieur du corps de douille (110),
**caractérisé en ce que**
la borne (300) comprend :
une première partie (301), qui est une partie dans la première direction (Y-Y') de la borne (300), et
une deuxième partie (302), qui est une autre partie dans la première direction (Y-Y') de la borne (300), qui ne comprend pas la première partie (301), l'impédance de la deuxième partie (302) étant supérieure à celle de la première partie (301),
la douille (100) comprenant en outre une rainure annulaire (120) dans une face périphérique intérieure (113) du corps de douille (110),
la rainure annulaire (120) entourant la deuxième partie (302) de la borne (300), et étant en retrait par rapport à celle-ci, de sorte qu'un axe central de la rainure annulaire (120) coïncide substantiellement à un axe central du corps de douille (110).

2. Connecteur (C1, C2) selon la revendication 1,
le corps (200) comprenant en outre une saillie annulaire (230) agencée sur une face périphérique extérieure du corps (200) et faisant saillie vers la rainure annulaire (120) de la douille (100),
et
la saillie annulaire (230) du corps (200) tenant dans la rainure annulaire (120) de la douille (100).

3. Connecteur (C1, C2) selon la revendication 1,
la borne (300) comprenant en outre une troisième partie (303), à savoir une autre partie dans la première direction (Y-Y') de la borne (300) qui ne comprend pas la première partie (301), l'impédance de la troisième partie (303) étant inférieure à celle de la première partie (301),
la douille (100) comprenant en outre une saillie annulaire (130) sur une face périphérique intérieure (113) du corps de douille (110), et
la saillie annulaire (130) entourant la troisième partie (303) de la borne (300), et faisant saillie vers celle-ci, de sorte qu'un axe central de la saillie annulaire (130) coïncide substantiellement avec un axe central du corps de douille (110).

4. Connecteur (C1, C2) selon la revendication 3,
le corps (200) comprenant en outre une rainure annulaire (240) agencée dans une face périphérique extérieure du corps (200), et évidée relativement à la saillie annulaire (130) de la douille (100), et
la saillie annulaire (130) de la douille (100) tenant dans la rainure annulaire (240) du corps (200).

5. Connecteur (C2) selon la revendication 3, le corps (200) comprenant en outre une butée (260) pour ancrer la saillie annulaire (130) depuis l'autre côté (Y') dans la première direction (Y-Y').

6. Connecteur (C1, C2) selon la revendication 1,
la douille (100) comprenant :
un fond (140) sur l'autre côté (Y') dans la première direction (Y-Y') du corps de douille (110), et
un orifice (150) s'étendant a travers le fond (140) dans la première direction (Y-Y'), et dont les dimensions dans une section transversale dans les deuxième (X-X') et troisième (Z-Z') directions sont inférieures aux dimensions intérieures dans une section transversale dans les deuxième (X-X') et troisième (Z-Z') directions du corps de douille (110),
la deuxième direction (X-X') étant substantiellement perpendiculaire à la première direction (Y-Y'), et la troisième (Z-Z') direction étant substantiellement perpendiculaire aux première (Y-Y') et deuxième (X-X') directions,
le corps (200) venant s'appuyer sur le fond (140) depuis le côté (Y) dans la première direction (Y-Y'), et l'orifice du boîtier (250) du corps (200) communiquant avec l'orifice (150) de la douille (100), et
le câble (400) étant partiellement reçu dans l'orifice du boîtier (250) du corps (200) depuis l'orifice (150) de la douille (100), et connecté à la partie postérieure (330) de la borne (300) dans l'orifice du boîtier (250) du corps (200).

7. Connecteur (C1, C2) selon la revendication 6, le câble (400) comprenant :
un isolateur extérieur (410), qui est un élément généralement tubulaire constitué par une matière isolante et située sur l'autre côté (Y') dans la première direction (Y-Y') relativement à la douille (100),
un conducteur extérieur (420), qui est un élément généralement tubulaire constitué par une matière électro-conductrice, disposé à l'intérieur de l'isolateur extérieur (410), et comprenant une partie distale, la partie distale du conducteur extérieur (420) faisant saillie de l'isolateur extérieur (410) à l'un côté (Y) dans la première direction (Y-Y') et étant connecté électriquement à la douille (100),
un isolateur intérieur (430), qui est un élément généralement tubulaire constitué par une matière isolante, disposé à l'intérieur du conducteur extérieur (420), et comprenant une partie distale, la partie distale de l'isolateur intérieur (430) faisant saillie du conducteur extérieur (420) vers l'un côté (Y) dans la première direction (Y-Y') et tenant dans l'orifice (150) de la douille (100), et
un conducteur intérieur (440) disposé à l'intérieur de l'isolateur intérieur (430), et comprenant une partie distale, la partie distale du conducteur intérieur (440) faisant saillie de l'isolateur intérieur (430) vers l'un côté (Y) dans la première direction (Y-Y'), et s'introduisant dans l'orifice du boîtier (250) du corps (200) et étant connecté à la partie postérieure (330) de la borne (300) dans l'orifice du boîtier (250) du corps (200).

8. Connecteur (C1, C2) selon la revendication 7,
la douille (100) comprenant en outre un porte-câble (160) s'étendant du fond (140) à l'autre côté (Y') dans la première direction (Y-Y'),
l'orifice (150) de la douille (100) s'étendant dans la première direction (Y-Y') à travers le fond (140) et le porte-câble (160), et
la partie distale du conducteur extérieur (420) du câble (400) tenant au-dessus du porte-câble (160).

9. Procédé de fabrication d'un connecteur (C1, C2), le procédé comprenant :
la fermeture ensemble d'un premier moule (10) comprenant un premier insert (11) et d'un deuxième moule (20) comprenant un deuxième insert (21), et le positionnement d'une douille (100) dans une cavité des premier (10) et deuxième (20) moules, la douille (100) comprenant un corps de douille (110), le corps de douille (110) ayant une forme généralement tubulaire, et s'étendant dans une première direction (Y-Y'), en bloquant le corps de douille (110) de la douille (100) avec le premier insert (11) d'un côté (Y) dans la première direction (Y-Y'), et l'insertion du deuxième insert (21) dans le corps de douille (110) depuis l'autre côté (Y') dans la première direction (Y-Y') pour amener le deuxième insert (21) au contact du premier insert (11) et bloquer le corps de douille (110) avec le deuxième insert (21) depuis l'autre côté (Y') dans la première direction (Y-Y'), de sorte que le corps de douille (110), le premier insert (11), et le deuxième insert (21) définissent un espace d'injection et une vanne (G) dans le premier insert (11) est amenée en communication avec l'espace d'injection ;
l'injection d'une résine en fusion à travers la vanne (G) dans l'espace d'injection dans le corps de douille (110), l'introduction de la résine en fusion dans l'espace d'injection, et la solidification de la résine en fusion introduite pour mouler par insertion le corps (200) entièrement à l'intérieur du corps de douille (110) ;
l'ouverture du premier moule (10) et du deuxième moule (20) espacés l'un de l'autre, l'extraction du premier insert (11) et du deuxième insert (21) de la douille (100) et du corps (200), en formant ainsi un orifice de boîtier (250) dans une partie du corps (200) d'où le deuxième insert (21) a été extrait ;
la préparation d'une borne (300) et d'un câble (400) connecté à la borne (300) ; et
l'insertion de la borne (300) dans le corps de douille (110) depuis l'autre côté (Y') dans la première direction (Y-Y') pour maintenir la borne (300) dans l'orifice de boîtier (250) du corps (200) de sorte que la borne (300) soit disposée entièrement à l'intérieur du corps de douille (110), et l'insertion du câble (400) partiellement dans le corps de douille (110) depuis l'autre côté (Y') dans la première direction (Y-Y'),
**caractérisé en ce que**
la douille (100) comprend une rainure annulaire (120) dans une face périphérique intérieure (113) du corps de douille (110),
la rainure annulaire (120) est disposée de sorte qu'un axe central de la rainure annulaire (120) coïncide substantiellement avec un axe central du corps de douille (110), et soit en retrait par rapport à l'axe central du corps de douille (110), et
la fermeture des premier (10) et deuxième (20) moules permet en outre à la rainure annulaire (120) de faire partie de l'espace d'injection,
le moulage par insertion du corps (200) comporte en outre l'admission de l'introduction dans la rainure annulaire (120) de la résine en fusion injectée dans l'espace d'injection, et
l'insertion de la borne (300) comprend la disposition d'une deuxième partie (302) de la borne (300) à l'intérieur de la rainure annulaire (120), l'impédance de la deuxième partie (302) étant supérieure à celle de la première partie (301).

10. Procédé selon la revendication 9,
la fermeture des premier (10) et deuxième (20) moules comportant en outre l'insertion du premier insert (11) dans le corps de douille (110) depuis l'un côté (Y) dans la première direction (Y-Y') pour bloquer le corps de douille (110) avec le premier insert (11) depuis l'un côté (Y) dans la première direction (Y-Y'), et la mise en communication d'un orifice d'injection de la vanne (G) du premier insert (11) avec l'espace d'injection à l'intérieur du corps de douille (110).

11. Procédé selon la revendication 9 ou 10,
la douille (100) comprenant une saillie annulaire (130) sur une face périphérique intérieure (113) du corps de douille (110),
la saillie annulaire (130) étant disposée de sorte qu'un axe central de la saillie annulaire (130) coïncide substantiellement à un axe central du corps de douille (110), et fasse saillie vers l'axe central du corps de douille (110),
la fermeture des premier (10) et deuxième (20) moules comportant en outre la disposition de la saillie annulaire (130) dans l'espace d'injection,
le moulage par insertion du corps (200) permettant en outre l'adhérence de la résine en fusion injectée dans l'espace d'injection à la saillie annulaire (130), et
l'insertion de la borne (300) comprenant la disposition d'une troisième partie (303) de la borne (300) à l'intérieur de la saillie annulaire (130), l'impédance de la troisième partie (303) étant supérieure à celle de la première partie (301).

12. Procédé selon la revendication 9 ou 10,
la douille (100) comprenant une saillie annulaire (130) sur une face périphérique intérieure (113) du corps de douille (110),
la saillie annulaire (130) étant disposée de sorte qu'un axe central de la saillie annulaire (130) coïncide substantiellement à un axe central du corps de douille (110), et fasse saillie vers l'axe central du corps de douille (110),
la fermeture des premier (10) et deuxième (20) moules comportant en outre la mise en butée du deuxième insert (21) avec une face supérieure de la saillie annulaire (130), et l'exposition d'une face de paroi sur l'autre côté (Y') dans la première direction (Y-Y') de la saillie annulaire (130) dans l'espace d'injection, et
le moulage par insertion du corps (200) permettant en outre l'adhérence de la résine en fusion injectée dans l'espace d'injection à la face de paroi de la saillie annulaire (130), en
l'insertion de la borne (300) comprenant la disposition d'une troisième partie (303) de la borne (300) à l'intérieur de la saillie annulaire (130), l'impédance de la troisième partie (303) étant supérieure à celle de la première partie (301).

13. Procédé selon la revendication 9 ou 10,
la douille (100) comprenant :
un fond (140) sur l'autre côté (Y') dans la première direction (Y-Y') du corps de douille (110), et
un orifice (150) s'étendant à travers le fond (140) dans la première direction (Y-Y'), et dont les dimensions dans une section transversale dans les deuxième (X-X') et troisième (Z-Z') directions sont inférieures aux dimensions intérieures dans une section transversale le long des deuxième (X-X') et troisième (Z-Z') directions du corps de douille (110),
la deuxième direction (X-X') étant substantiellement perpendiculaire à la première direction (Y-Y'), et la troisième (Z-Z') direction étant substantiellement perpendiculaire aux première (Y-Y') et deuxième (X-X') directions,
la fermeture des premier (10) et deuxième (20) moules comprenant en outre l'insertion du deuxième insert (21) dans l'orifice (150) de la douille (100) depuis l'autre côté (Y') dans la première direction (Y-Y') pour amener le deuxième insert (21) en butée avec le premier insert (11) et bloquer l'orifice (150) de la douille (100) avec le deuxième insert (21) depuis l'autre côté (Y') dans la première direction (Y-Y'), de sorte que le deuxième insert (21) bloque le corps de douille (110) depuis l'autre côté (Y') dans la première direction (Y-Y'), et que le corps de douille (110), le fond (140), le premier insert (11), et le deuxième insert (21) définissent ainsi l'espace d'injection,
le moulage par injection du corps (200) permettant en outre à la résine en fusion injectée dans l'espace d'injection d'adhérer au fond (140) de la douille (100),
l'ouverture des premier (10) et deuxième (20) moules comprenant en outre la formation de l'orifice de boîtier (250) dans une partie du corps (200) d'où le deuxième insert (21) a été extrait, de sorte que l'orifice de boîtier (250) communique avec l'orifice (150) de la douille (100), et
l'insertion de la borne (300) et du câble (400) comprenant en outre l'insertion de la borne (300) de l'orifice (150) de la douille (100) dans l'orifice de boîtier (250) du corps (200) pour maintenir la borne (300) dans l'orifice de boîtier (250) du corps (200), et pour insérer le câble (400) partiellement dans l'orifice de boîtier (250) du corps (200) depuis l'orifice (150) de la douille (100).

14. Procédé selon la revendication 9, la fermeture des premier (10) et deuxième (20) moules comprenant en outre l'installation d'un dispositif de retenue de douille (H) dans la cavité, le dispositif de retenue de douille (H) ayant une forme généralement tubulaire s'étendant dans la première direction (Y-Y') et tenant au-dessus de la douille (100).
